# EUROPEAN PATENT APPLICATION

(11) **EP 1 903 570 A2**
(43) Date of publication of application: **26.03.2008**
(21) Application number: 07008453.8
(22) Date of filing: 25.04.2007
(51) Int. Cl.: G11B 23/00

(54) **Disk medium with antenna and method for manufacturing the same**

(30) Priority: 21.09.2006 JP 2006256205
(71) Applicant: Hitachi, Ltd., Chiyoda-ku Tokyo 100-8280 (JP)
(72) Inventor: Sakama, Isao, Chiyoda-ku Tokyo 100-8220 (JP); Ashizawa, Minoru, Chiyoda-ku Tokyo 100-8220 (JP)
(74) Representative: Strehl, Peter

(57) **Abstract**

A disk medium having an IC chip capable of delivering information to an external source contactlessly even if several media are stacked. In the disk medium (1B), an annular slot (6B) constituting a non-film portion without metal film is formed close to the boundary between an information non-recording area (R2) and an information recording area (R4). The area (R1) formed with the metal film is separated into an outer antenna portion (13) and a second antenna portion (15A). The second is a C-shaped member in which a central non-film area (R5) on the inner peripheral side and the annular slot (6B) are connected via a notch (15a). Signal input/output electrodes (5a, 5b) constituting the terminals of the IC chip (5) for supplying power to the antenna are connected to the metal films of the first and second antenna (13, 15A) over the annular slot (6B) at a narrow portion (6a).

## Description

### BACKGROUND OF THE INVENTION

### Field of the Invention

This invention relates to a seal having an inlet with an IC chip mounted thereon and an antenna, a disk medium such as CD or DVD having mounted thereon an inlet and an antenna, a disk medium such as CD or DVD having mounted thereon an IC chip and an antenna, and a method of manufacturing the disk medium and the seal.

### Description of the Related Art

In recent years, the ownership and use of CD (compact disk) and DVD (digital versatile disk) as an optical disk medium that can record a large capacity of music and image data have extended remarkably. Further, an optical disk using a blue semiconductor laser as a light source is under development for the purpose of recording high-quality images for a long time, and as a kind of such optical disk, the next-generation DVD is being commercialized. In the description that follows, these optical disks are referred to collectively as a disk medium.

Now that the high-quality digital contents can be easily stored in a portable recording medium, the importance of copyright protection of the digital contents has increased. On the other hand, a RFID (radio frequency identification) tag constituting an IC chip capable of receiving and delivering information from and to external sources contactlessly has recently come to be employed as an admission certificate, a railway ticket or electronic money. The RFID tag, having no built-in battery, receives by antenna and converts the radio wave or magnetic field from a reader/writer (R/W) into an electromotive force, and therefore, is advantageously lightweight, high in portability and usable semipermanently. In addition, the RFID is very difficult to copy.

With this situation as a background, the enhancement of copyright protection has been conceived by mounting the RFID tag on the disk medium. By mounting a RFID tag on a disk medium with a disk ID in read-only status, for example, the chance of copying a disk medium having the same disk ID can be reduced.

In mounting the RFID tag on the disk medium, however, an antenna for radio communication and power supply is required to be formed on the disk medium. A plurality of frequency bands are conceived for radio communication with the RFID tag, and the length and shape of the antenna are varied depending on a particular frequency band. Generally, a coiled antenna is used for the long wave band (125 to 135 kHz) and the short wave band (13.56 MHz), while a rectilinear antenna (dipole antenna) or a plane antenna (microstrip antenna) of a length corresponding to a half wavelength is used for UHF (ultrahigh frequency) band (about 900 MHz) or microwave band (2.45 GHz).

JP-A-2006-92630 (Paragraphs 0023 to 0033, Figs. 1, 2) discloses a disk medium with a RFID tag mounted thereon, in which the metal film layer area other than the information recording area formed in a predetermined range radially of the disk medium is formed with an annular slot of a length one half of the communication wavelength λ, and in which a metal film and a terminal for supplying power to the antenna of the IC chip of the RFID tag are connected to each other at the central portion of the slot on both sides of the slot. In this disk medium, the slot formed in the metal film functions as a slot antenna, and therefore, the radio communication of the IC chip is not hampered by the metal film.

### SUMMARY OF THE INVENTION

The technique described in JP-A-2006-92630 (Paragraphs 0023 to 0033, Figs. 1, 2) has made it possible to read the information of a disk medium. The conventional technique disclosed in this publication, however, fails to take the need of collectively reading the information of a plurality of disk media, which is the problem often encountered in actual commodity distribution, into consideration. According to the technique disclosed in JP-A-2006-92630, therefore, in the case where a multiplicity of disk media are stacked in a stocker, the radio wave radiated from the R/W antenna brought near to the upper or lower surface of the stocker fails to reach all the disk media unless the slots of the plurality of the disk media in stack are aligned with each other. Thus, the information cannot be collectively read or written. In the conventional technique, therefore, the management of a plurality of disks is not taken into account.

This invention has been achieved in view of the problem described above, and the object thereof is to provide a disk medium having mounted thereon an IC chip capable of receiving and delivering information from and to an external source contactlessly (with radio wave, for example) even in the case where a plurality of the disk media are stored in stack in a stocker.

The disk medium according to this invention has been conceived to achieve the aforementioned object. According to this invention, therefore, there is provided a disk medium having mounted thereon an IC chip capable of receiving and delivering information from and to an external source contactlessly, comprising a metal film area and a non-film area formed in such a manner as to separate the metal film area, wherein the non-film area includes a substantially annular slot arranged in the neighborhood substantially equidistant from a central hole, and wherein the power supply terminals of the IC chip are connected to the metal films of the metal film area over the non-film area.

According to another aspect of the invention, there is provided a disk medium having mounted thereon an IC chip capable of receiving and delivering information from and to an external source contactlessly, comprising a metal film area and a non-film area formed in such a manner as to separate the metal film area, wherein the non-film area includes a substantially annular slot arranged in the neighborhood substantially equidistant from a central hole, and wherein predetermined point of an inlet including the IC chip are connected to the metal films of the metal film area electrically or by capacitance coupling.

According to this invention, there is provided a disk medium having mounted thereon an IC chip capable of receiving and delivering information from and to an external source contactlessly even in the case where a plurality of the disk media are stored in a stack.

### BRIEF DESCRIPTION OF THE DRAWINGS

Figs. 1A to 1C are diagrams showing a general configuration of a disk medium according to a first embodiment of the invention, in which Fig. 1A is a top plan view, Fig. 1B an enlarged view of the portion A₁ in Fig. 1A, and Fig. 1C an enlarged sectional view taken in line Y₁-Y₁ in Fig. 1A.
Figs. 2A and 2B are diagrams showing a general configuration of a disk medium according to a first modification of the first embodiment, in which Fig. 2A is a top plan view, and Fig. 2B an enlarged view of the portion A₂ in Fig. 2A.
Fig. 3A is schematic diagram showing an annular slot and a notch in Figs. 2A and 2B.
Fig. 3B is a diagram showing the correlation between the width L2 of the annular slot and the communicable distance.
Fig. 3C is a diagram showing the correlation between the width W1 of the notch and the communicable distance.
Figs. 4A to 4C are diagrams showing a general configuration of the disk medium according to a second modification of the first embodiment, in which Fig. 4A is a top perspective view, Fig. 4B an enlarged perspective view of a depression and Fig. 4C an enlarged sectional view taken in line Y₂-Y₂ in Fig. 4A.
Fig. 5 is a diagram showing a general configuration of a disk medium according to a third modification of the first embodiment, which is an enlarged sectional view of the third modification corresponding to the enlarged sectional view taken in line Y₂-Y₂ in Fig. 4A.
Figs. 6A to 6C are schematic diagrams showing the process of forming a narrow portion of the depression by anisotropic deposition, in which Fig. 6A is an enlarged perspective view of the depression and a groove, Fig. 6B an enlarged sectional view taken in line X₁-X₁ in Fig. 6A, and Fig. 6C a schematic diagram for explaining the anisotropic deposition in the neighborhood of the depression.
Fig. 7 is a diagram showing a general configuration of a disk medium according to a fourth modification of the first embodiment, which is an enlarged sectional view of the fourth modification corresponding to the enlarged sectional view taken in line Y₂-Y₂ in Fig. 4A.
Figs. 8A and 8B are schematic diagrams showing the process of forming the narrow portion of the depression by anisotropic deposition, in which Fig. 8A is a schematic diagram showing the shape of the depression, and Fig. 8B a schematic diagram for explaining the anisotropic deposition in the neighborhood of the depression.
Fig. 9 is a top plan view of a disk medium according to another modification of the first embodiment.
Figs. 10A to 10D are diagrams showing a general configuration of the disk medium according to a second embodiment of the invention, in which Fig. 10A is a top plan view, Fig. 10B an enlarged view of the portion B₁ in Fig. 10A, Fig. 10C a plan view of the small inlet as viewed from the signal input/output electrodes of the IC chip, and Fig. 10D a plan view showing the shape of the small antenna of the small inlet.
Fig. 11A is an enlarged sectional view taken in line Y₃-Y₃ in Fig. 10A, and Fig. 11B a diagram showing an equivalent circuit of the small inlet.
Figs. 12A and 12B are diagrams showing a general configuration of a disk medium using a small inlet having a different shape according to the second embodiment, in which Fig. 12A is a top plan view, and Fig. 12B an enlarged view of the portion B₂ in Fig. 12A.
Fig. 13 is a top perspective view showing a general configuration of a disk medium according to a modification of the second embodiment.
Fig. 14A is an enlarged view showing the depression of the portion B₃ in Fig. 13A, and Fig. 14B is an enlarged sectional view taken in line Y₄-Y₄ in Fig. 13A.
Fig. 15 is a diagram showing the configuration of a disk medium with an annular slot antenna seal attached thereto, in which (a) is a diagram for explaining the state before attaching the annular slot antenna seal to the original disk, and (b) a top plan view showing the general configuration of the disk medium after attaching the annular slot antenna seal.
Fig. 16A is a plan view showing the annular slot antenna seal, and Fig. 16B an enlarged sectional view taken in line Y₅-Y₅ in Fig. 16A.
Figs. 17A to 17D are diagrams showing a general configuration of a disk medium according to a fourth embodiment of the invention, in which Fig. 17A is a top plan view, Fig. 17B a perspective view showing the structure of the antenna-mounted IC chip, and Figs. 17C, 17D are enlarged views of the portion B₄ in Fig. 17A.
Figs. 18A and 18B are enlarged sectional views taken in line Y₆-Y₆ in Fig. 17A, in which Fig. 18A is an enlarged sectional view with the antenna-mounted IC chip mounted directly on a resin substrate, and Fig. 18B an enlarged sectional view with the antenna-mounted IC chip mounted on the bottom surface of the depression formed in the resin substrate.
Fig. 19 is a schematic diagram for explaining the communication by the reader/writer (R/W) in the case where a multiplicity of disk media are stored as a stack in a stocker.
Figs. 20A to 20C are diagrams showing the configuration with the IC chip mounted on a one-side DVD according to a fifth embodiment of the invention, in which Fig. 20A is a sectional view of the one-side DVD, Fig. 20B a top plan view of a first disk and Fig. 20C a bottom view of a second disk..
Figs. 21A to 21C are sectional views of a portion with the IC mounted according to the fifth embodiment of the invention, in which Fig. 21A is an enlarged sectional view taken in line Y₈-Y₈ of the second disk in Fig. 20C, Fig. 21B an enlarged sectional view taken in line Y₇-Y₇ of the first disk in Fig. 20B, and Fig. 21C a sectional view after attachment.
Fig. 22 is a schematic diagram showing a positioning unit for setting the two disks in relative positions in the DVD according to this invention.
Fig. 23 is a flowchart showing the process of attaching the two disks in the positioning unit shown in Fig. 21.
Figs. 24A and 24B are diagrams showing the configuration with the small inlet mounted on the one-side DVD according to a first modification of the fifth embodiment, in which Fig. 24A is a top plan view of the first disk, and Fig. 24B a bottom view of the second disk.
Fig. 25 is an enlarged sectional view taken in line Y₉ -Y₉, an enlarged sectional view taken in line Y₁₀-Y₁₀ and a sectional view after attachment in Figs. 24A and 24B.
Fig. 26 is a sectional view with the small inlet mounted on the one-side DVD according to a second modification of the fifth embodiment.
Figs. 27A and 27B are diagrams showing the configuration of a two-sided DVD according to a sixth embodiment, in which Fig. 27A is a top plan view of the first disk, and Fig. 27B a bottom view of the second disk.
Figs. 28A to 28C are sectional views with the IC chip mounted on the two-sided DVD according to the sixth embodiment, in which Fig. 28A is an enlarged sectional view taken in line Y₁₂-Y₁₂ of the second disk before attachment, Fig. 28B an enlarged sectional view taken in line Y₁₁-Y₁₁ of the first disk before attachment, and Fig. 28C a sectional view after attachment.
Fig. 29 is a top plan view showing a general configuration of a disk medium according to a seventh embodiment of the invention.

### DESCRIPTION OF EMBODIMENTS

With reference to the drawings, a preferred embodiment of an IC-mounted disk medium according to the best mode for carrying out the invention (hereinafter referred to as the embodiment) is explained below. To facilitate the understanding, the basic structure of the disk medium according to an embodiment is explained first.

The disk medium includes a CD, a DVD or the like.

### (Basic structure of disk medium)

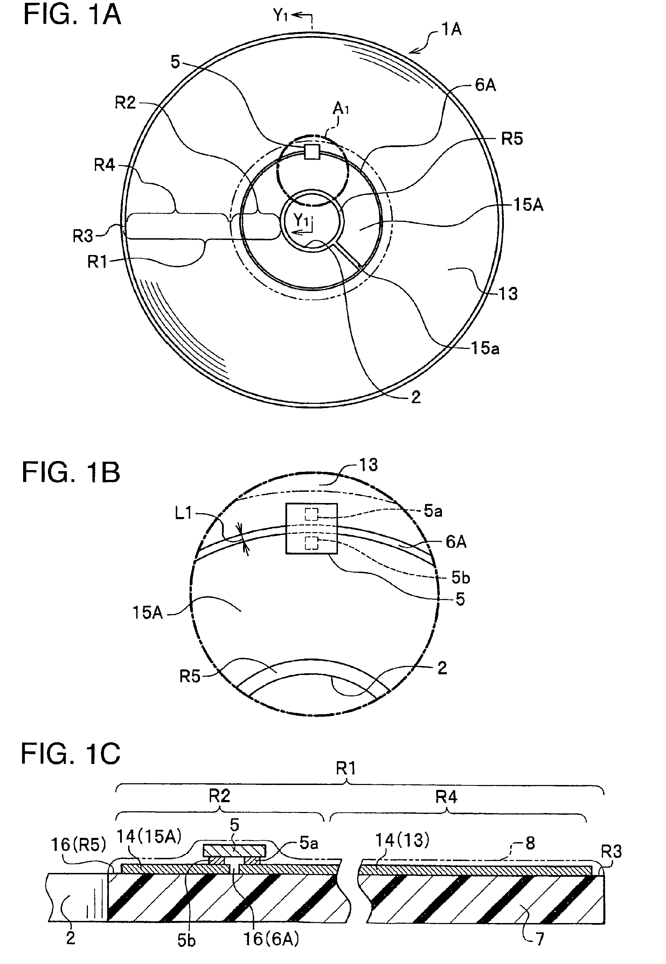

A disk medium 1A shown in Fig. 1A has a basic structure shared by an ordinary optical disk medium such as CD or DVD as described below. Specifically, the disk medium 1A, having a central hole 2 at the central portion thereof, is rotated around the central hole 2 when inserted in the player. Then, the laser light is radiated on the information recording surface thereof so that the signal is read in accordance with the amount of the reflected light. Also, an area R1 on the outside of the central hole 2 at a predetermined distance therefrom is formed with a metal thin film (metal film area) 14 (Fig. 1C) of a conductive material such as Ag or A1 as thick as about several tens of nanometers (nm) on a resin substrate 7. The inside part of the area R1 formed with the metal film 14 other than the area R2 on the inner edge and the area R3 on the outer edge makes up an information recording area R4. In the shown case, the area R3 on the outer edge is not formed with the metal film 14. The area R2 on the inner edge is called the information non-recording area R2. In Fig. 1A, the boundary between the information non-recording area R2 and the information recording area R4 is designated by a circle of two-dot chain. As shown in Fig. 1C, the surface of the metal film 14 is coated with a protective layer 8.

The protective layer 8 formed on the metal film 14 is also used as an adhesive. An ultraviolet-cured resin is an example, which is coated by the spin coat method. In the case where the ultraviolet-cured resin is coated over the range of 15 to 60 mm in radius, for example, the protective layer 30 nm thick can be formed.

In the case where the disk medium 1A is CD, the total thickness of the resin substrate 7, the metal film 14 and the protective layer 8 is about 1.2 mm.

The CD or DVD in general use has the diameter of 12 cm. The area R1 formed with the metal film 14 (Fig. 1C) has the diameter of 25 mm to 119 mm from the center, of which the information recording area R4 has the diameter of 44 mm to 117 mm. Around the central hole 2, however, a clamping area is normally formed in the range up to 36 mm along the diameter from the center. Also, a small-sized optical disk medium having a minimum diameter of about 6 cm is available.

The metal film 14 may be formed in the area including the clamping area diametrically outside of the central hole 2. Regardless of the boundary of the area R1 formed with the clamping area and the metal film 14, the area of the non-film portion 16 not formed with the metal film 14 diametrically outward of the center is called the central non-film area R5, while the diametrical area formed with the metal film 14 where data is not recorded is called the information non-recording area R2. Also, the diametrical area formed with the metal film 14 where information is or can be recorded is called the information recording area R4. The clamping area, as it is generally called, may be the central non-film area R5 not formed with the metal film 14 or may include the area R1 formed with the metal film 14.

The metal film 14 is formed of such a material as Al, Ag, Au, Ni, Cr, Cu, Al-Cu, Al-Pd-Cu, Ag-Pd-Ti, etc. Especially, the alloy material of Al, Ag or Au group is desirable. Also, by forming the metal film 14 to the thickness of not less than 50 nm, the reflectivity of the radio wave can be increased. In the case where the metal film 14 is formed by sputtering of high anisotropy, for example, the thickness of about 140 nm can be achieved. The metal film 14 can be formed also by other methods such as vacuum deposition and ink jet printing.

### (First embodiment)

First, the disk medium according to a first embodiment is explained with reference to Fig. 1. Fig. 1A is a top plan view showing a general configuration of the CD making up the disk medium according to this embodiment, Fig. 1B an enlarged top plan view of the portion A₁ in Fig. 1A, and Fig. 1C an enlarged sectional view taken in line Y₁-Y₁ in Fig. 1A.

According to this embodiment, as compared with the basic structure described above, the metal film 14 is not formed in the peripheral area in the neighborhood of the central hole 2. Specifically, a central non-film area (non-film area) R5 having the diametrical width of about 0.5 mm is formed of the non-film portion 16, on the outside of which an information non-recording area R2 of the metal film 14 is formed with an annular slot (non-film area) 6A configured of the non-film portion 16 (Fig. 1C) about 30 mm in diameter not formed with the metal film 14. The width L1 of the annular slot 6A corresponds to the interval between the signal input/output electrodes (power supply terminals for the antenna) 5a, 5b described later. The annular slot 6A electrically separates the area R1 formed with the metal film 14 into a first antenna portion (metal film area) 13 outside the annular slot 6A and a second antenna portion (metal film area) 15A inside the annular slot 6A. Further, the second antenna portion 15A is diametrically formed of a notch 15a of the non-film portion 16 not formed with the metal film 14 in such a manner as to connect the central non-film area R5 and the annular slot 6A through the non-film portion 16. In other words, the second antenna portion 15A is formed as a C-shaped flat area of the metal film 14.

By masking the metal film 14 in forming the metal film 14 by sputtering, the metal film 14 in the neighborhood of the boundary between the information non-recording area R2 and the information recording area R4 of the disk medium 1A, as shown in Fig. 1A, is formed with the annular slot 6A, the notch 15a and the central non-film area R5. An IC chip 5 is mounted over the annular slot 6A on the inside and outside thereof in such a manner that the signal input/output electrodes 5a, 5b providing power supply terminals for the antenna of the IC chip 5 are located at corresponding positions 5a, 5b, respectively, indicated by dashed lines. In other words, the IC chip 5 is mounted as shown in Fig. 1C.

The signal input/output electrodes 5a, 5b are each formed of, for example, an Au pad, and coupled with the metal film 14 by ultrasonic bonding or metal eutectic bonding. The signal input/output electrodes 5a, 5b may be connected with the metal film 14 through an anisotropic conductive film. After mounting the IC chip 5 on the surface of the metal film 14, the surface of the metal film 14 is coated with the protective layer 8.

With this configuration, the annular slot 6A included in the area R1 formed with the metal film 14 functions as a slot antenna corresponding to the loop antenna for resonating and amplifying the received electric field as a standing wave. The IC chip 5 can thus conduct radio communication with an external R/W through the slot antenna.

The diametrical area of the portion in which the annular slot 6A is formed and the IC chip 5 is mounted cannot be used for recording information, and therefore, desirably included in the information non-recording area R2. More preferably, the particular diametrical area constitutes the information non-recording area R2 according to the standard of the disk medium 1A and the non-clamping area at the same time.

The best communication is made possible in the case where the peripheral length of the annular slot 6A corresponds to one communication wavelength like in the normal loop antenna. According to this embodiment, for example, the peripheral length of the annular slot 6A is suitable for the communication wavelength of 2.45 GHz.

The measurement taken by the inventors shows that in the case where the signal input/output electrodes 5a, 5b of the IC chip 5 are electrically connected to the areas of the metal film 14 located diametrically inside and outside of the annular slot 6A, respectively, the impedance of the antenna changes with the peripheral relative position with the notch 15a at the connecting position, i.e. the peripheral angle of the mounting position of the IC chip 5 against the notch 15a. Taking advantage of this fact, therefore, the impedance matching between the IC chip 5 and the antenna can be secured. Also, even in the case where the peripheral length of the annular slop 6A is shorter than one wavelength, the IC chip can be operated with high efficiency and superior communication established by optimizing the mounting position of the IC chip 5 against the annular slot 6A, i.e. by securing the impedance matching between the IC chip 5 and the antenna.

The impedance change with the peripheral relative position described above is specifically explained. Assume that the peripheral position 180° opposite to the peripheral position of the notch 15a is assumed to a reference 0° and at angles of -180° and +180° counterclockwise and clockwise, respectively. The impedance assumes a continuously changing curve having a local maximum value at 0° and about ±90° and a local minimum value just before (toward 0°) ±45° and i 180°.

### (Effects of first embodiment)

According to this embodiment, the area R1 formed with the annular slot 6A on the metal film 14 can be used as an antenna of the IC chip 5 of the disk medium 1A, thereby making it possible to form a highly sensitive antenna. Since the impedance matching is secured between the antenna and the IC chip 5 by peripheral relative positions of the notch 15a and the IC chip 5, a special impedance matching circuit is not required on the part of the IC chip 5. As a result, the area of the RFID tag as a whole using the IC chip 5 can be reduced. Also, since the metal film 14 is used as an antenna and no new member is used, the cost is not increased as compared with the conventional IC chip-mounted disk medium.

Also, in view of the fact that the area R1 formed with the metal film 14 covering a wide area makes up an antenna, a wide read/write area can be provided to the R/W. Especially, the annular slot 6A is arranged diametrically outside of the clamping area in the neighborhood of the boundary between the information non-recording area R2 and the information recording area R4, and therefore, the communication can be established during the reproducing or recording operation within the reader of the disk medium.

This configuration can be used also to prevent the alteration or illegal duplication of high added-value information such as the bank customer information or transaction information as well as the copyright management of the digital contents.

According to this embodiment, the annular slot 6A or the notch 15a can be formed by masking when forming the metal film 14 as described above, or by removing, by laser, the portion of the metal film 14 constituting the annular slot 6A and the notch 15a after forming the metal film 14 on the resin substrate 7.

Also, according to this embodiment, the first antenna portion 13 is assumed to include the information recording area of the disk medium. Nevertheless, the second antenna portion 15A may include the information recording area of the disk medium. This configuration can change the peripheral length of the slot in keeping with different frequencies.

### (First modification of first embodiment)

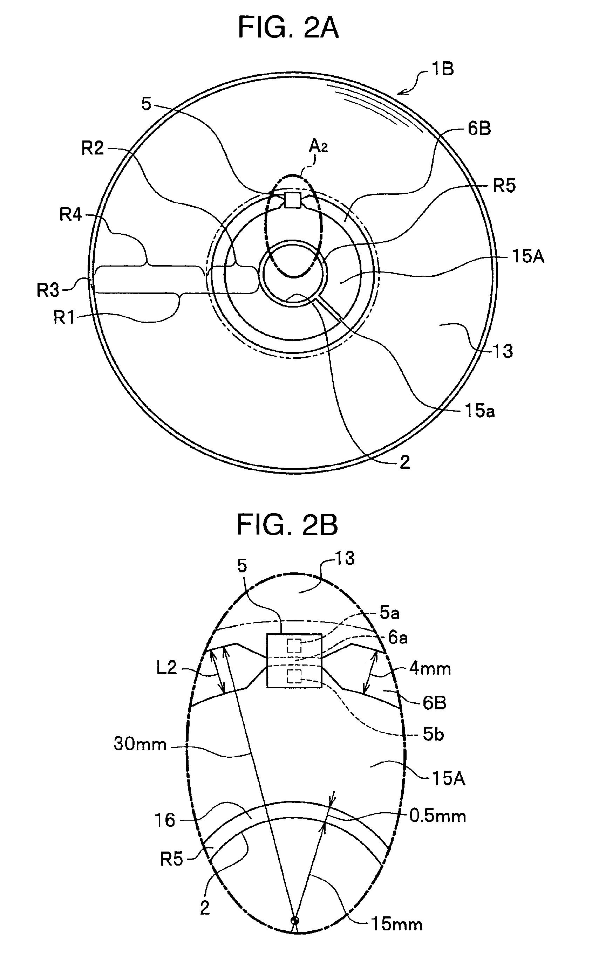

Next, a first modification of the first embodiment is explained with reference to Fig. 2. Figs. 2A and 2B are diagrams showing a general configuration of the CD constituting the disk medium 1B according to the first modification of the embodiment, in which Fig. 2A is a top plan view and Fig. 2B an enlarged view of the portion A₂ in Fig. 2A.

This modification is different from the first embodiment in that as shown in Fig. 2B, the annular slot (non-film area) 6B has the outer diameter of 30 mm and the width L2 of about 4 mm which is larger than the width L1 of the annular slot 6A in the first embodiment, so that the portion at which the IC chip is mounted has a narrow portion 6a and the signal input/output electrodes 5a, 5b can be formed over the annular slot 6B between inside and outside. The same component parts as those of the first embodiment are designated by the same reference numerals, respectively, and not described again.

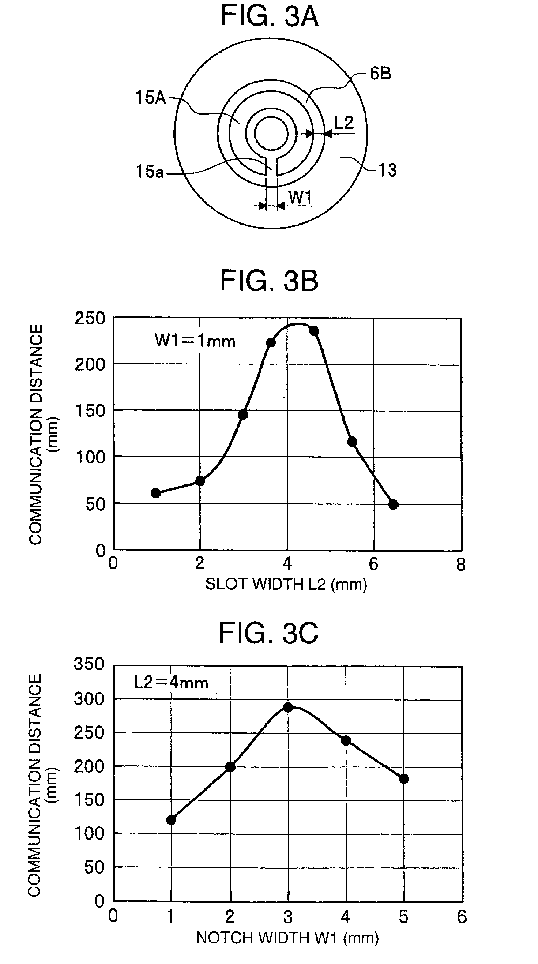

The present inventors have confirmed that the communicable distance is improved by increasing the width L2 of the annular slot 6B. As shown in Fig. 3B, as the result of measuring the change in communicable distance against the width L2 of the annular slot 6B for a single disk, it has been found that the best communicable distance is obtained for the slot width L2 of 4 mm.

In addition to the advantage of the increased communicable distance, the slot width L2 has something to do with the ease with which the radio wave is passed. In the case where a plurality of disks are stacked, the advantage of the ease with which radio wave passes exceeds the disadvantage of the excessively large width. The communicable distance with a stack of disks, therefore, is shifted toward a larger value of the slot width L2 corresponding to the local maximum value of the communicable distance in the neighborhood of 4 mm shown in Fig. 3B. As a result, in the case where a multiplicity of disks are stacked, the slot width L2 should be set to 5 mm.

Also, as shown in Fig. 3C, the communicable distance is found to be longest for the 3-mm width W1 of the notch 15a.

### (Second modification of first embodiment)

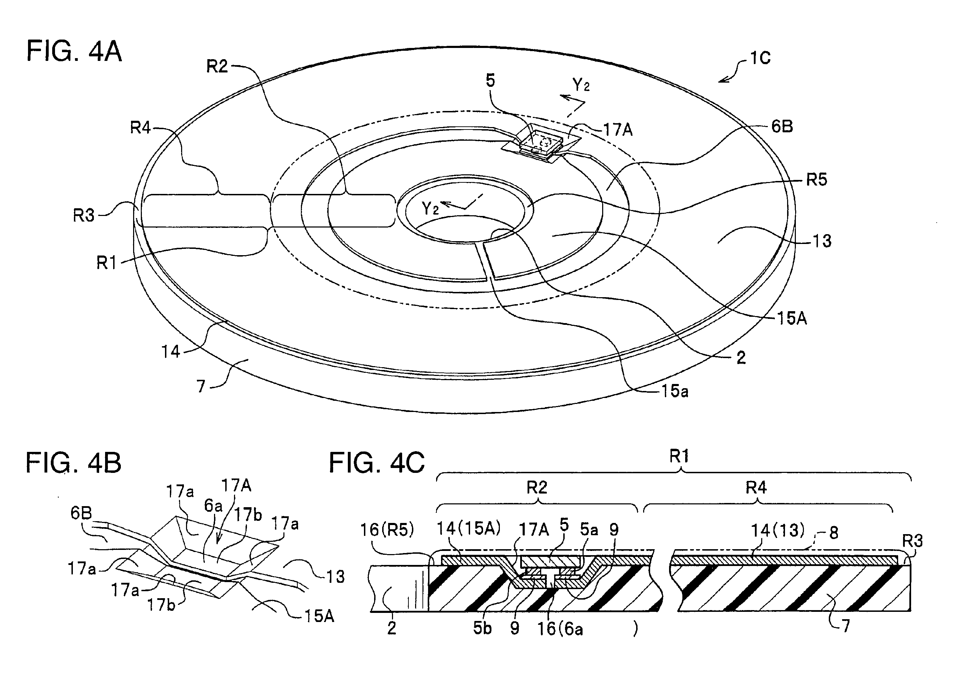

Next, a second modification of the first embodiment is explained with reference to Figs. 4A to 4C. Figs. 4A to 4C are diagrams showing a general configuration of the CD providing a disk medium 1C according to the second modification of the embodiment, in which Fig. 4A is a top perspective view, Fig. 4B an enlarged view of the depression, and Fig. 4C an enlarged sectional view taken in line Y₂-Y₂ in Fig. 4A.

Unlike in the first modification of the first embodiment in which the IC chip 5 is mounted on the surface of the metal film 14 on the flat resin substrate 7, the second modification is such that a depression 17A is formed on the resin substrate 7 of the disk medium 1C, and forming the metal film 14, the IC chip 5 is mounted on the surface of the metal film 14 on the bottom of the depression 17A. The same component parts as those of the first modification of the first embodiment are designated by the same reference numerals, respectively, and not explained any more.

The depth of the depression 17A substantially coincides with the total thickness of the IC chip 5 and the anisotropic conductive film 9 described later, and is about 100 µm. As shown in Fig. 4B, the flat configuration of the depression 17A is a square or a rectangle substantially similar to that of the IC chip 5. The four side walls of the depression 17A each constitute a slope 17a toward the bottom 17b, and the metal film 14 is formed by masking the annular slot 6B including the portion of the slopes 17a extending along the periphery of the depression 17A and the portion corresponding to the narrow portion 6a of the bottom surface 17b. As a result, the slopes 17a and the bottom surface 17b of the depression 17A, though not designated by reference numerals in Fig. 4C, are also formed with the metal film 14 in an area other than the narrow portion 6a.

Next, the anisotropic conductive film 9 is coated on the surface of the metal film 14 formed on the bottom of the depression 17A, and with the IC chip 5 placed on the bottom surface of the depression 17A, pressure is applied. Then, the signal input/output electrodes 5a, 5b of the IC chip 5 are electrically connected to the metal film 14 over the narrow portion 6a of the non-film portion 16 formed on the bottom surface of the depression 17A. The whole surface of the area R1 formed with the metal film 14 is coated thereby to form the protective layer 8 (Fig. 4B).

### (Third modification of first embodiment)

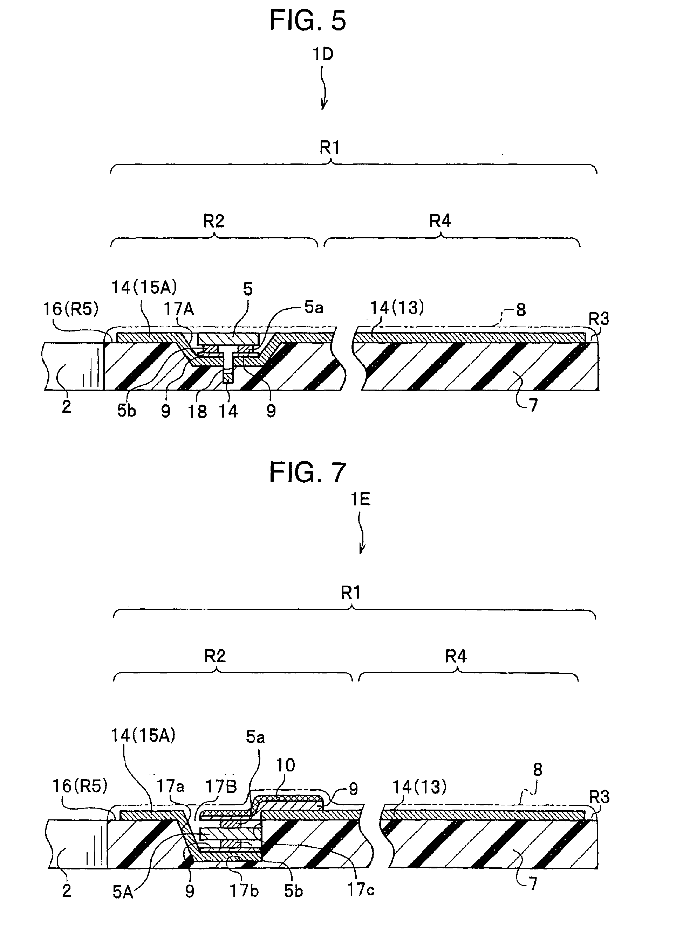

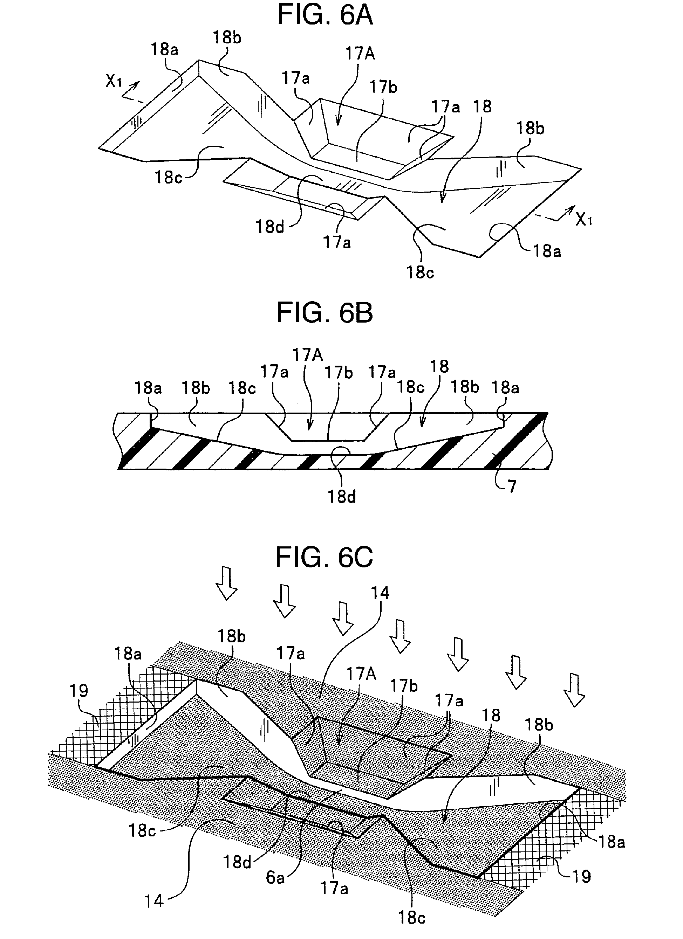

Next, a third modification of the first embodiment is explained with reference to Figs. 5, 6. The top perspective view showing the general configuration of the CD providing the disk medium according to this modification is substantially the same as Fig. 4A and not shown. Fig. 5 is a diagram corresponding to the enlarged sectional view taken in line Y₂-Y₂ in Fig. 4A.

This modification is based on the second modification of the first embodiment, and different from the second modification of the first embodiment in that as shown in Figs. 6A, 6B, a groove 18 extending along the peripheral direction is formed on the bottom surface of the depression 17A. Fig. 6B is an enlarged sectional view taken in line X₁-X₁ in Fig. 6A, and Fig. 6C a diagram for explaining the operation of the anisotropic deposition on the depression and the groove. The same component parts as those of the second modification of the first embodiment are designated by the same reference numerals, respectively, and not described again.

The depth of the groove 18 is about 100 µm, for example, from the bottom surface 17b of the depression 17A, and the side walls of the groove 18 are substantially vertical or inverse-tapered vertical side walls 18b with the bottom surface 18d of the groove 18 widened progressively. The groove 18 extends in left and right peripheral directions along the peripheral slopes 17a of the depression 17A. The groove 18 has slopes 18c widened and the depth decreased progressively with the extension in left and right peripheral directions, until the width finally becomes equal to that of the annular slot 6B and the groove 18 is closed by substantially vertical walls 18a.

As shown in Fig. 6C, the annular slot 6B is masked with a photoresist 19 indicated by double hatching, and the metal film 14 is formed by anisotropic deposition (sputtering) substantially vertically from above the resin substrate 7. Then, the upper surface of the resin substrate 7, the slopes 17a of the four sides and the bottom surface 17b of the depression 17A, and the slopes 18c and the bottom surface 18d of the groove 18 are formed with a metal film 14 to the thickness of 50 to 250 µm (0.05 to 0.25 µm). Since the rectilinearity of the anisotropic deposition is very strong at the time of forming the film, however, the vertical walls 18a and the opposed vertical walls 18b of the groove 18 are not formed with the metal film 14.

Thus, the metal film 14 formed is separated into diametrically inside and outside portions by the vertical walls 18a, the opposed vertical side walls 18b of the groove 18 and the wide body portion of the annular slot 6B. Therefore, the first antenna portion 13 and the second antenna portion 15A electrically isolated from each other can be formed.

### (Fourth modification of first embodiment)

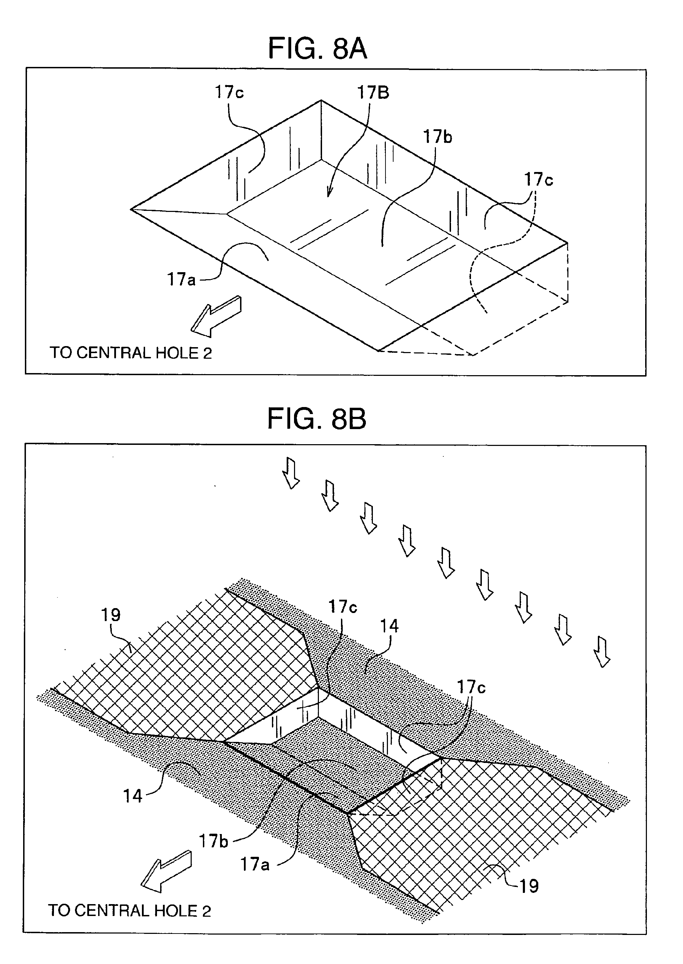

Next, the fourth modification of the first embodiment is explained with reference to Figs. 7 and 8A to 8C. The top perspective view showing a general configuration of the CD providing the disk medium 1E according to this modification is substantially the same as Fig. 4A and therefore not shown. Fig. 7 is a diagram corresponding to the enlarged sectional view taken in line Y₂-Y₂ in Fig. 4A.

This modification is based on the second modification of the first embodiment, and different from the second modification of the first embodiment in that as shown in Figs. 8A, 8B, the depression 17B is differently shaped than the depression 17A in the second modification of the first embodiment and that the IC chip 5A is used in which the signal input/output electrodes 5a, 5b are arranged above and under the IC chip 5A. The same component parts as those of the second modification of the first embodiment are designated by the same reference numerals, respectively, and not described again.

The depth of the depression 17B is substantially equal to the total thickness including the thickness of the IC chip 5 and twice the thickness of the anisotropic conductive film 9, and for example, about 100 µm. The shape of the flatness of the depression 17B is a square or a rectangle substantially similar to that of the IC chip 5A. Only one of the diametrically opposed side walls of the two sides of the depression 17B, i.e. the diametrically inside wall is the slope 17a directed toward the bottom surface 17b, while the side walls of the remaining three sides are substantially vertical surfaces 17c. Before forming a film, as shown in Fig. 8B, the wide body of the annular slot 6B is masked with the photoresist 19 as indicated by double hatching.

The metal film 14 is formed by anisotropic deposition (sputtering) from above in the direction substantially perpendicular to the resin substrate 7. The upper surface of the resin substrate 7, the slope 17a of one side and the bottom surface 17b of the depression 17B are formed with a metal film 14 having the thickness of 50 to 250 nm (0.05 to 0.25 µm). Since the anisotropic deposition has a strong rectilinearity at the time of forming a film, however, the vertical surfaces 17c are not formed with the metal film 14.

The metal film 14 thus formed, therefore, is separated diametrically inside and outside parts by the vertical surfaces 17c of the depression 17B making up the narrow portion 6a and the wide body of the annular slot 6B. Thus, the first antenna portion 13 and the second antenna portion 15A electrically isolated from each other are formed.

Next, as shown in Fig. 7, the anisotropic conductive film 9 is coated on the surface of the metal film 14 formed on the bottom surface 17b of the depression 17B, and the signal input/output electrode 5b of the IC chip 5A is placed face down on the bottom surface 17b of the depression 17B and pressed. Further, the anisotropic conductive film 9 is coated on a part of the upper surface (signal input/output electrode 5a) of the IC chip 5A and the metal film 14 diametrically outside of the depression 17B adjoining the upper surface of the IC chip 5A. Further, with a metal foil 10 placed thereon, the upper surface (signal input/output electrode 5a) of the IC chip 5A is electrically connected with the metal film 14 diametrically outside of the depression 17B. The whole surface of the area R1 formed with the metal film 14 is coated and formed with the protective layer 8.

Any of the diametrically inside or outside walls of the depression 17B may constitute the slope 17a directed toward the bottom surface 17b. The signal input/output electrode under the IC chip 5A electrically connected with the bottom surface 17b and the slope 17a is connected to one of the first antenna portion 13 and the second antenna portion 15A. Then, the signal input/output electrode above the IC chip 5A is electrically connected to the other antenna portion.

### (Effects of second to fourth modifications of first embodiment)

As described above, according to the second to fourth modifications of the first embodiment shown in Figs. 4A to 8C, the IC chip 5 or the IC chip 5A is buried in the resin substrate 7 along the thickness thereof, so that the surface of the area R1 formed with the metal film 14 of the disk medium 1C, ID, 1E can be flattened more than in the first embodiment and the first modification thereof. Thus, a larger mechanical clearance can be secured between the upper surface of the protective layer 8 of the disk media 1C to 1E and the disk drive unit.

### (Other modifications of first embodiment)

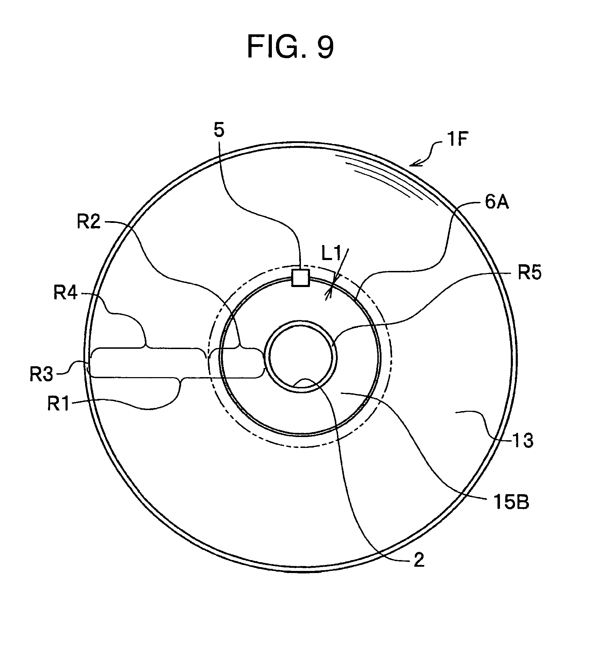

In the first embodiment and the modifications thereof, the second antenna portion 15A is formed with the notch 15a constituting the non-film portion 16. Nevertheless, the invention is not limited to this configuration. In the case where the IC chip 5 or the IC chip 5A has an impedance matching circuit built therein, the second antenna portion 15B may be simply an annular area formed with the metal film 14 as in the disk medium 1F shown in Fig. 9. Fig. 9 illustrates the annular slot 6A having the width as small as L1. Without being limited to this configuration, however, the IC chip 5 or the IC chip 5A may be mounted, with a wide annular slot 6B, on the narrow portion 6a described above. In this case, the IC chip 5, 5A can be arranged at an arbitrary position along the peripheral direction of the annular slot 6A, 6B.

### (Second embodiment)

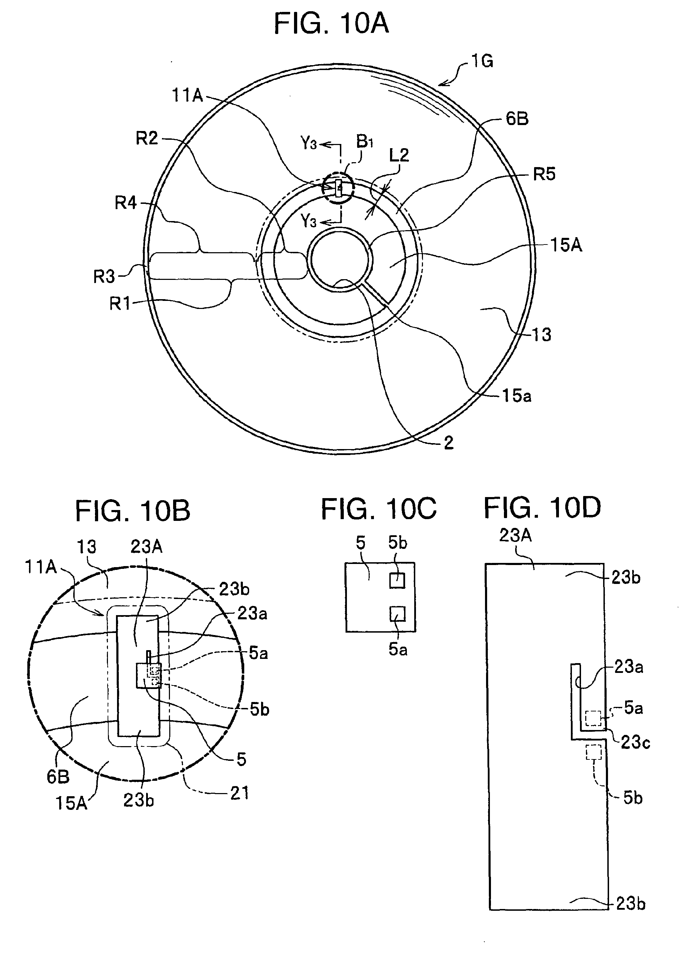

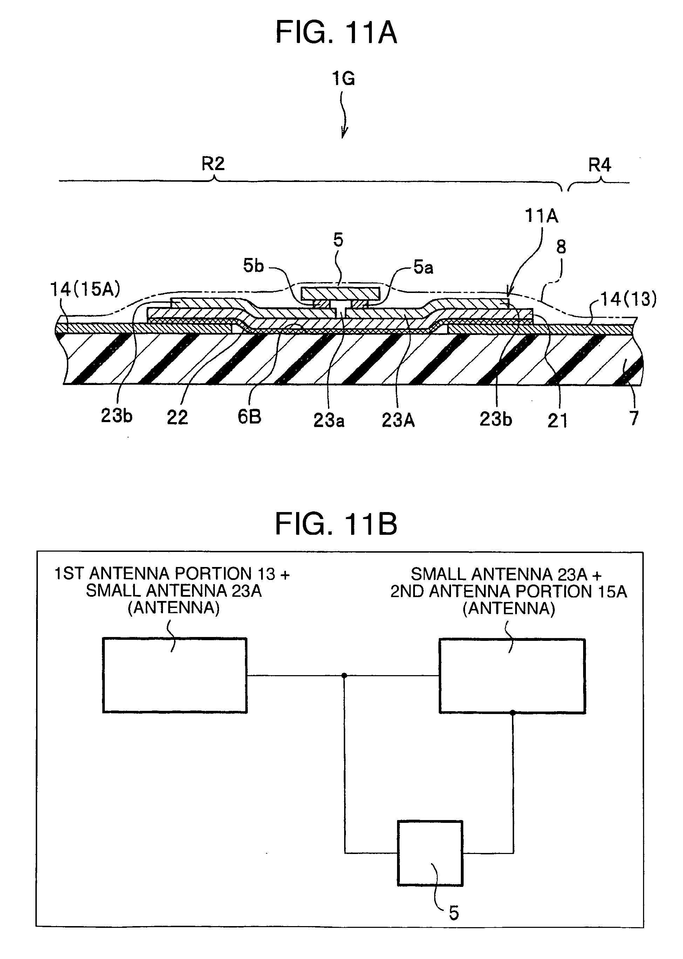

Next, the disk medium according to a second embodiment is explained with reference to Figs. 10A to 12B. Figs. 10A to 10D show a general configuration of the disk medium 1G according to this embodiment, in which Fig. 10A is a top plan view, Fig. 10B an enlarged view of the portion B₁ in Fig. 10A, Fig. 10C a plan view showing the signal input/output electrode surface of the IC chip and Fig. 10D a plan view showing the antenna portion of the small inlet. Fig. 11A is an enlarged sectional view taken in line Y₃-Y₃ in Fig. 10A, and Fig. 11B a diagram for explaining the equivalent circuit of the small inlet.

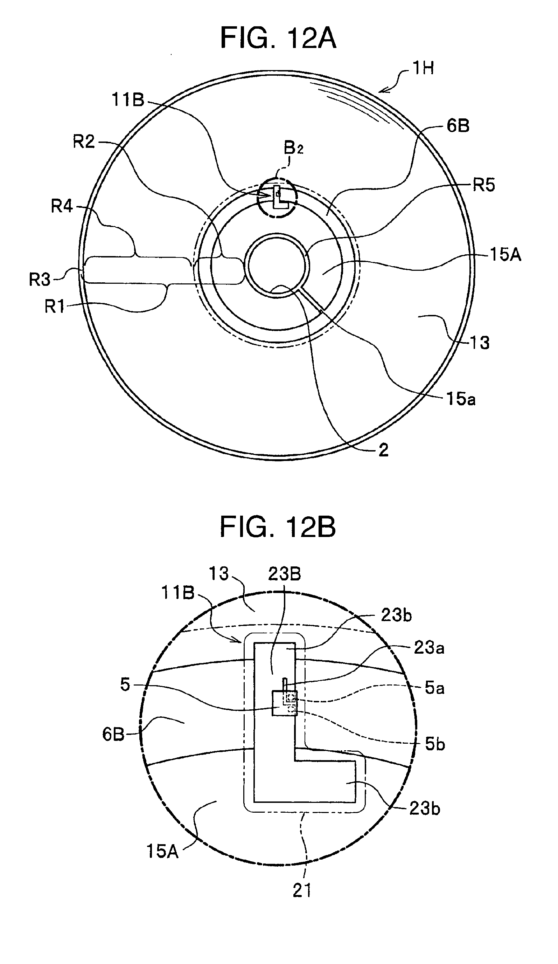

Figs. 12A and 12B are diagrams showing a general configuration of a disk medium 1H using a small inlet of another shape according to this embodiment, in which Fig. 12A is a top plan view and Fig. 12B an enlarged view of the portion B₂ in Fig. 12A.

Unlike the disk medium 1B according to the first modification of the first embodiment in which the IC chip 5 is mounted directly on the surface of the metal film 14 of the information non-recording area R2 formed with the metal film 14, the disk medium 1G, 1H according to this embodiment has mounted thereon a small inlet 11A or 11B including an IC chip 5 and a small antenna 23A or 23B in the information non-recording area R2 formed with the metal film 14. According to this embodiment, unlike the first modification of the first embodiment, the annular slot 6B has no narrow portion 6a for electrically connecting the signal input/output electrodes 5a, 5b of the IC chip 5, and has the width L2 of 3 mm larger than that of the IC chip 5 over the whole periphery thereof. The same component parts as those in the first modification of the first embodiment are designated by the same reference numerals, respectively, and not described again.

The small inlet referred to in this embodiment includes an 1C chip and a small antenna long and wide enough to form a slit for impedance matching between the antenna and the IC chip formed on the disk medium, and these component parts are fixed on a base film or the like.

Normally, the inlet antenna length would be equal to one half of the wavelength λ of the radio wave used for communication taking the dielectric constant on the resin substrate into consideration. According to this embodiment, however, a small inlet with a shorter antenna can be used and thus priority can be given to the reduced size. Even in the case where the length of the inlet antenna is not larger than one half of the wavelength λ, the communication with R/W is made possible by the operation of the small inlet itself or in collaboration with other metal members (the metal film in this embodiment) as long as impedance matching can be secured.

As shown in Fig. 10B, the small inlet 11A is configured in such a manner that the rectilinear small antenna 23A formed of a metal film of an electric conductor such as A1 is formed as a film or printed on the surface of a base film 21 (insulating material) of, for example, polyethylene terephthalate (PET). Thus, an L-shaped slit 23A is formed at the central portion of the small antenna 23A, and the signal input/output electrodes 5a, 5b of the IC chip 5 are mounted in electric connection with the small antenna 23A by ultrasonic bonding, eutectic bonding or through an anisotropic conductive film over the slit 23a. The small inlet 11A has the length of 5 to 15 mm and the wavelength of about 0.04λ to 0.14λ where λ is the electric wavelength taking the dielectric constant on the resin substrate of the radio wave used for transmission and receiving into consideration. The small inlet 11A having this configuration, as shown in Fig. 10A, is mounted by being attached on the surface of the information non-recording area R2 of the disk medium 1G by the adhesive 22 (Fig. 11B) coated on the back of the base film 21. In the process, the two ends 23b of the small antenna 23A are connected by capacitance coupling with the metal film 14 through the base film 21. According to this embodiment, one end 23b of the small antenna 23A constituting "the predetermined point of the small antenna" is connected with the metal film 14 of the first antenna portion 13, and the other end 23b with the metal film 14 of the second antenna portion 15A by capacitance coupling.

When attaching the small inlet 11A, care should be taken so that the slit 23a of the small antenna 23A may not be laid on the metal film 14 of the information non-recording area R2.

As shown in Fig. 10D, the signal input/output electrodes 5a, 5b of the IC chip 5 are electrically connected to the small antenna 23A located on both sides over the L-shaped corner of the L-shaped slit 23a. In this way, the stub 23c formed by the slit 23a is connected in series between the other portion of the small antenna 23A, the first antenna portion 13 and the second antenna portion 15A making up an antenna on the one hand and the IC chip 5 on the other hand. Thus, the stub 23c acts as a series-connected inductor component (Fig. 11B). This inductor component offsets the capacitive component in the IC chip 5, and can secure the impedance matching between the other portion of the small antenna 23A, the first antenna portion 13 and the second antenna portion 15A on the one hand and the IC chip 5 on the other hand. Specifically, the IC chip 5 makes it possible for the annular slot 6B formed in the metal film 14 having a sufficiently large area to function as a slot antenna corresponding to the loop antenna, while at the same time securing the impedance matching between the IC chip 5 and the slot antenna. This slit 23a is referred to as the impedance matching circuit.

The impedance matching between the IC chip 5 and the remaining portion of the small antenna 23A making up an antenna and the metal film 14 is determined by the area of the stub 23c which in turn is determined by the length of the L-shaped corner of the slip 23a.

The small inlet is not limited to the rectilinear form, but as shown in Fig. 12, may be the small inlet 11B in the shape of L, or though not shown, may be in the shape of a channel having ears at the ends thereof. The requirement, however, is that one of the ends of the small antenna is coupled by capacitance with the metal film 14 on one of the diametrically inside and outside of the annular slot 6B, and the other end of the small antenna is coupled by capacitance with the metal film 14 on the other diametrical side of the annular slot 6B.

With the L-shaped small inlet 11B or the channel-shaped small inlet, the area of capacitance coupling at the ends is increased, and so is the antenna efficiency. Also, the use of the small antenna eliminates the need of the narrow portion 6a of the annular slot 6B, thereby simplifying the shape of the annular slot 6B.

According to this embodiment, the same effects as in the first modification of the first embodiment are produced. Further, since the small inlets 11A, 11B has an impedance matching circuit, the notch 15a of the second antenna 15A may be eliminated.

Also, according to this embodiment, the impedance matching circuit is not limited to the L-shaped slit 23a, and may assume another form. A T-shaped slit is an example of an alternative to the L-shaped slit 23a. In this case, the T-shaped slit is formed in such a manner that the vertical part of T corresponds to the width of the small antenna 23A or 23B and the horizontal part of T to the length of the small antenna 23A or 23B, and the IC chip 5 corresponding to the signal input/output electrodes 5a, 5b providing a power supply terminal for the antenna is mounted over the vertical part of T at the corner of T of the T-shaped slit.

According to this embodiment, as described above, the slit 23a of the small inlet 11A, 11B is located preferably in a manner not laid on the metal film 14. Even in the case where the width of the annular slot 6B is so small that the slit 23a is overlaid on the metal film 14, however, the impedance matching can be secured according to the relative peripheral positions of the position where the small inlet 11A, 11B is mounted and the position of the notch 15a.

### (Modification of second embodiment)

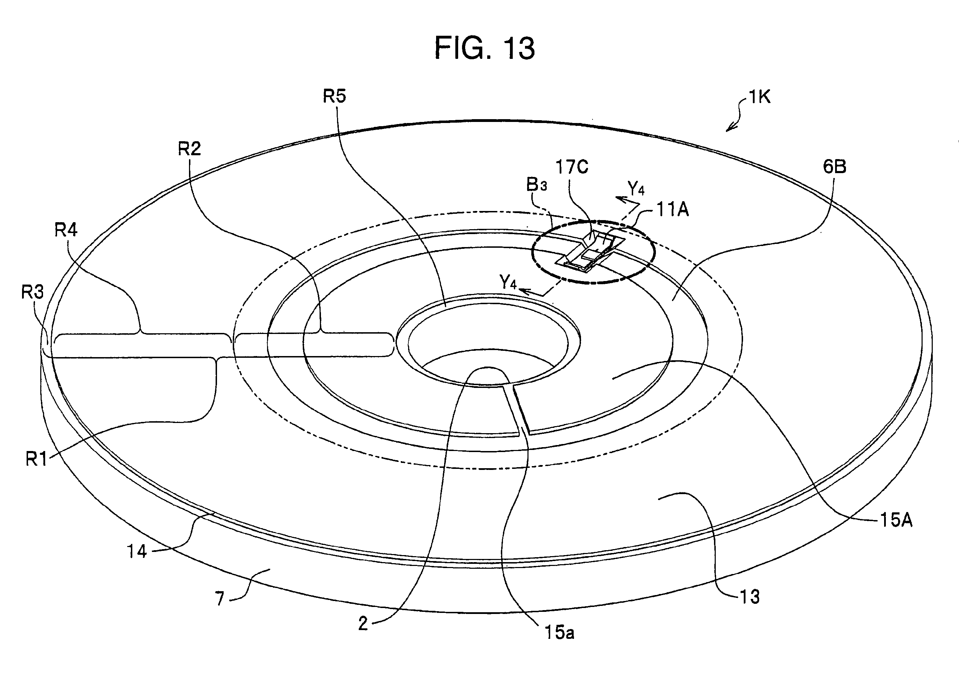

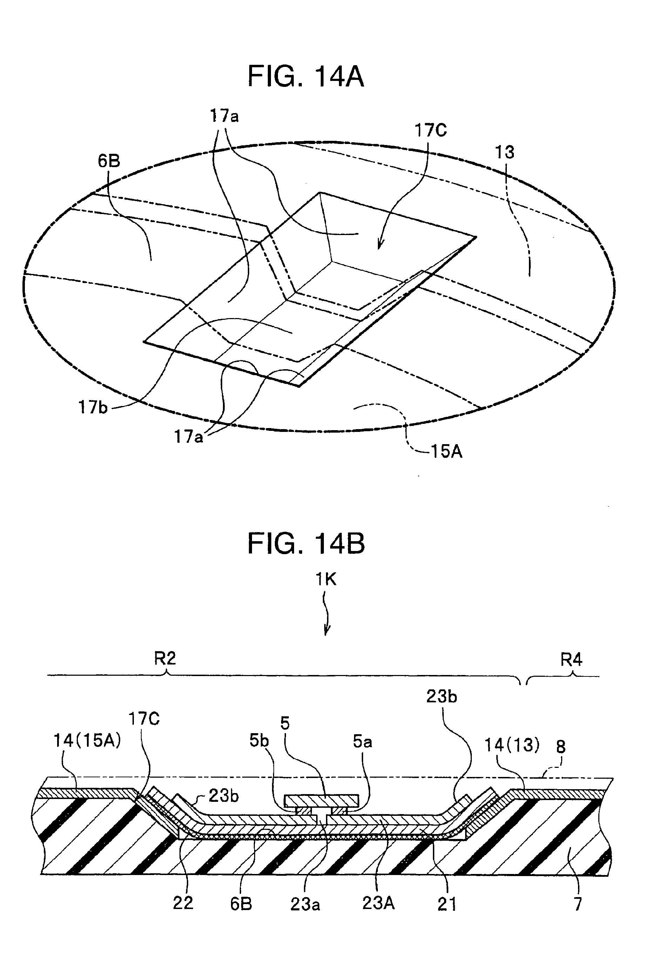

A modification of this embodiment is explained with reference to Figs. 13 and 14. This modification represents the second embodiment in which the information non-recording area R2 has a depression 17C with the small inlet 11A mounted therein. Figs. 13 and 14 show a general configuration of the CD providing the disk medium 1K according to this modification, in which Fig. 13A is a top perspective view, Fig. 14B an enlarged view of the depression at the portion B₃ in Fig. 13A, and Fig. 14C an enlarged sectional view taken in line Y₄-Y₄ in Fig. 13A.

The rectilinear small inlet 11A has the same configuration as shown in Fig. 10B. As shown in Fig. 13A, a depression 17C substantially flush with the small inlet 11A formed on the resin substrate 7 in a form diametrically long in the information non-recording area R2. The side walls on the four sides of the depression 17C, as shown in Fig. 14B, each have a slope 17a directed toward the bottom surface 17b. As shown by two-dot imaginary chain, the small inlet 11A is attached on the depression 17C after forming the metal film 14. In the process, as shown in Fig. 14C, the ends 23b on both sides of the small antenna 23A are connected by capacitance coupling to the metal film 14 of the first antenna portion 13 and the metal film 14 of the second antenna portion 15A, respectively, through the base film 21.

In attaching the small inlet 11A, the slit 23a of the small antenna 23A is preferably not laid over the metal film 14.

This modification, in which the shape of the small inlet is assumed to be rectilinear like the small inlet 11A, is not limited to such a configuration and may have a small inlet of another shape.

As shown in Fig. 12B, for example, the L-shaped small inlet 11B or a channel-shaped small inlet, not shown, with ears at the ends may be employed. Nevertheless, the depression 17C is required to be flat like the small inlet.

### (Effects of second embodiment and modifications thereof)

According to this embodiment or modifications (Figs. 10 to 15) thereof, the area R1 formed with the metal film 14 functions as an antenna, and therefore, the small inlet 11A, 11B may be as short as 5 to 15 mm and can be configured of a small antenna 23A formed with a slit 23a for impedance matching. Thus, the small inlet 11A, 11B can be greatly reduced in size.

According to this embodiment and modifications thereof, the ends 23b of the small antenna 23A, 23B of the small inlet 11A, 11B are connected by capacitance coupling to the metal film 14, and the area R1 formed with the metal film 14 can be used as an antenna.

As a result, the same effects as the first embodiment and modifications thereof are produced. Specifically, in the small inlet mounted as a RFID tag on the disk medium 1G, 1H, 1K, the area R1 formed with the metal film 14 can be used as an antenna of the IC chip 5. Coupled with the small antenna 23A, 23B, therefore, a highly sensitive antenna is formed. Also, the metal film 14 is used as an antenna without adding any new member, and therefore, the cost is not increased as compared with the conventional IC chip-mounted disk medium.

Also, the wide area of the metal film 14 acts as an antenna, and therefore, a wide area can be made available for read/write operation of R/W.

Especially, according to modifications of this embodiment, the flatness of the upper surface after attaching the small inlet 11A, 11B can be improved more than in the second embodiment, and a larger mechanical clearance with the disk drive unit can be secured on the upper surface of the protective layer 8.

### (Third embodiment)

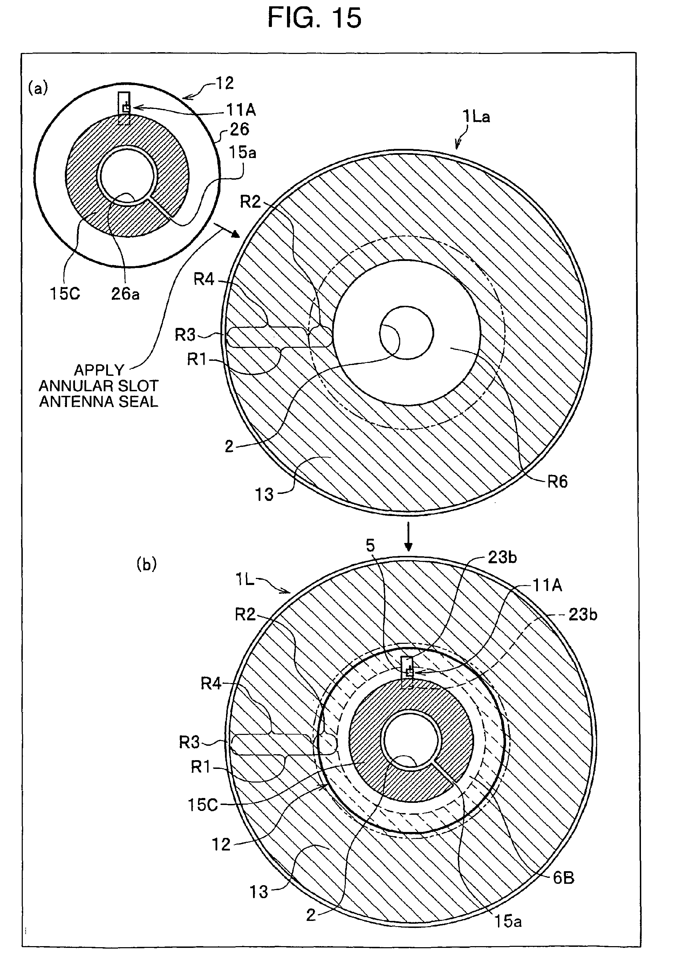

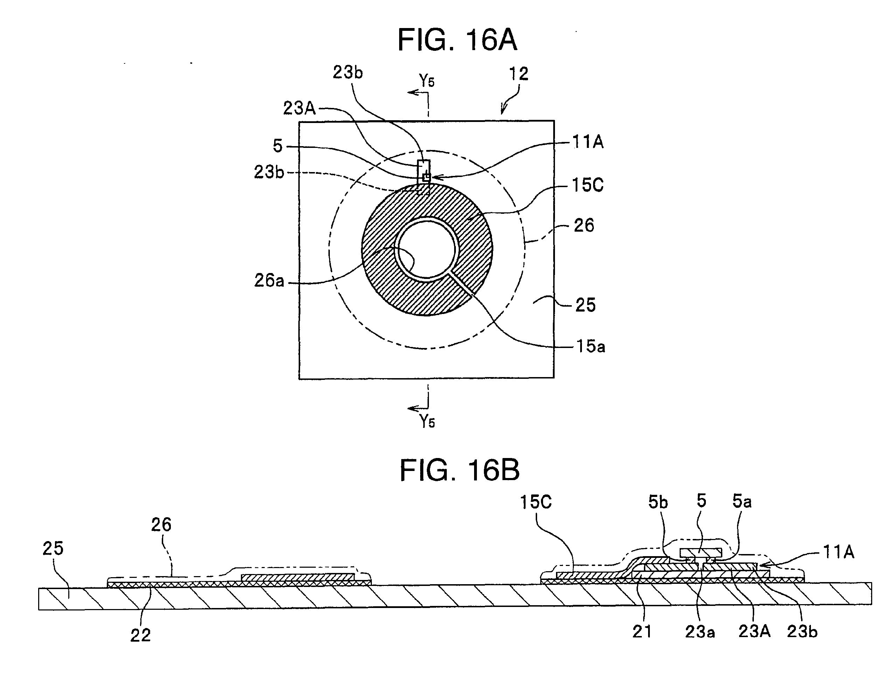

Next, a third embodiment is explained with reference to Figs. 15, 16. In the second embodiment described above, the small inlet 11A, 11B may be attached after forming the protective film 8. In such a case, as shown in Fig. 15, the existing complete disk medium (hereinafter referred to as the original disk) 1La can converted into a disk medium 1L with RFID at low cost.

This embodiment is explained in detail taking the small inlet 11A as an example. The same component parts as those in the second embodiment are designated by the same reference numerals, respectively, and not described again.

As shown in (a) of Fig. 15, an annular slot antenna seal 12 having mounted thereon a small inlet 11A and a C-shaped second antenna portion (annular metal film) 15C of A1 foil, for example, is attached to the original disk 1La already formed with the protective film 8, thereby making up a disk medium 1L shown in (b) of Fig. 15. Fig. 16A is a plan view showing the annular slot antenna seal, and Fig. 16B an enlarged sectional view taken in line Y₅-Y₅ in Fig. 16A.

As shown in (a) of Fig. 15, the original disk 1La is configured of a central non-film area having the non-film portion 16 not formed with the metal film 14 in the range of up to 15 mm from the center of the central hole 2 and an area R1 formed with the metal film 14 diametrically outside of the non-film area R5.

As shown in Figs. 16A, 16B, the annular slot antenna seal 12 is so configured that a discal protective film 26, having the lower side thereof coated with an adhesive not shown and formed with the central hole 26a, is attached on the lower side of the adhesive in such a manner as to include the small inlet 11A located at a predetermined position of the protective film 26 and an annular second antenna portion 15C formed of an Al foil and having a notch 15a. Further, the annular slot antenna seal 12 has attached thereon the release paper 25 coated with the adhesive 22 in accordance with the shape of the protective film 26.

The central hole 26a has the same diameter as the central hole 2 of the original disk 1La. The second antenna portion 15C has an outer diameter of 24 mm and an inner diameter of 16 mm, for example. The second antenna portion 15C is attached on the protective film 26 concentrically with the central hole 26a having the inner diameter of 15 mm of the protective film 26. Also, the small inlet 11A is arranged in such a manner that the small antenna 23A has the length thereof directed with along the diameter of the central hole 26a and the diametrically inner end 23b laid under the second antenna portion 15C. Further, the small inlet 11A is set in predetermined peripheral relative position with respect to the notch 15a as appropriate for impedance matching. Also, the small inlet 11A is superposed on the second antenna portion 15C over such a length that with the central hole 26a set to the central hole 2 of the original disk 1La, the diametrically outward end 23b of the small antenna 23A of the small inlet 11A is superposed on the metal film 14 of the information non-recording area R2 as shown in (a) of Fig. 15 and the slit 23a of the small antenna 23A is not superposed on the metal film 14.

In attaching the protective film 26 and the release paper 25 with the small inlet 11A and the second antenna portion 15C therebetween, a contour is drawn on the release paper 25 at positions corresponding to the central hole 26a, the second antenna portion 15C and the small inlet 11A. Then, the small inlet 11A is arranged and attached on the release paper 25 coated with the adhesive 22 to the position of the contour of the small inlet 11A. After that, the protective film 26 with the second antenna portion 15C already attached on the lower surface thereof is attached on the release paper 25 to the position of the contour of the central hole 26a of the release paper 25 and the contour of the notch 15a thereby to produce the annular slot antenna seal 12.

Before use, the release paper 25 is removed, and the protective film 26, with the central hole 26a thereof set in position to the cental hole 2 of the original disk 1La, is attached on the original disk 1La. By doing so, the small inlet 11A can be mounted accurately and easily at a predetermined position on the original disk 1La to form a disk medium 1L. As a result, as shown in (b) of Fig. 15, the area immediately outside of the outer diameter of the annular slot antenna seal 12 can be used as an information recording area R4, and the annular slot 6B having the width of 3 mm can be accurately formed between the inner diameter (30 mm) of the area R1 formed with the metal film 14 and the outer diameter (24 mm) of the second antenna portion 15C. The end 23b diametrically outside of the small antenna 23A of the small inlet 11A is connected by capacitance coupling with the metal film 14 of the information non-recording area R2, while the end 23b diametrically inside of the small antenna 23A is connected by capacitance coupling with the A1 foil of the second antenna portion 15C. Thus, a slot antenna corresponding to the loop antenna is formed on the IC chip 5 by the small inlet 11A, the first antenna portion 13 and the second antenna portion 15C.

The small inlet 11A is explained above with reference to Figs. 15, 16, and this invention is not limited to this configuration. Instead, the channel-shaped small inlet is applicable also to the second embodiment using the small inlet 11B.

### (Effects of third embodiment)

According to this embodiment, the area R1 of the existing original disk 1La formed with the metal film 14 can be easily used and manufactured as a slot antenna corresponding to the loop antenna. Also, the second antenna portion 15C can be produced with a C-shaped A1 foil, for example, and reduced greatly in thickness. Even in the case where the slot antenna is included in the clamping area, therefore, the mechanical clearance with the disk drive unit on the upper surface of the protective film 26 of the disk medium 1L is not substantially affected. Also, the annular slot antenna seal 12, being located near the rotation center, reduces the imbalance due to the displacement of the center of gravity.

With the disk medium 1L according to this embodiment, the same effects as those of the second embodiment and the modifications thereof can be produced. Specifically, in the small inlet 11A functioning as the RFID tag mounted on the disk medium 1L, the first antenna portion 13 and the second antenna portion 15C formed with the metal film 14 can be used as an antenna of the IC chip 5, and coupled with the small antenna 23A, a highly sensitive antenna is formed. Also, since the metal film 14 covering a wide area constitutes the antenna, a wide read/write area is provided for the R/W.

### (Fourth embodiment)

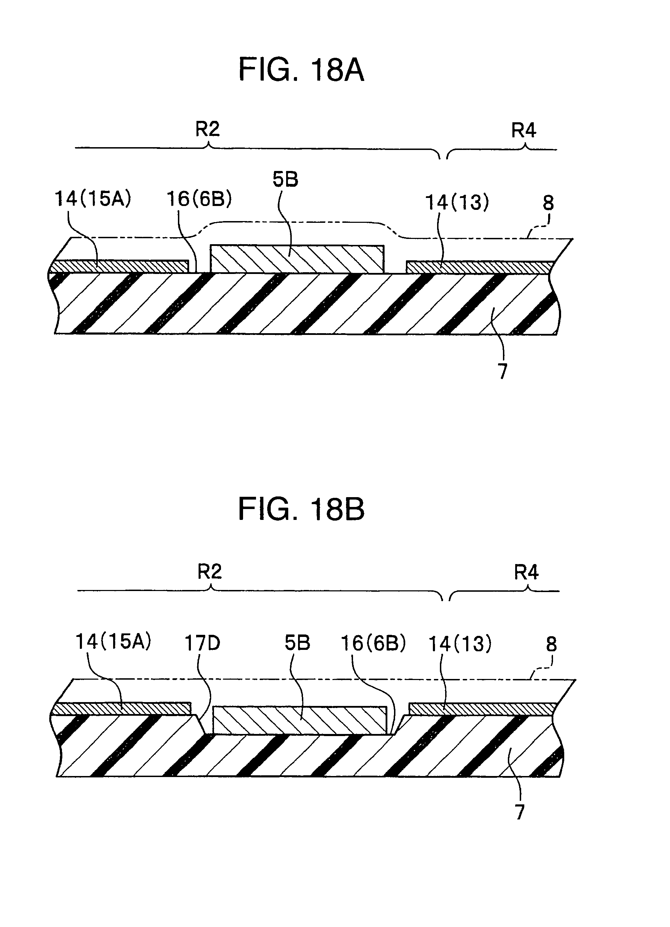

Next, a fourth embodiment is explained with reference to Figs. 17A to 17D and Figs. 18A and 18B. This embodiment is based on the first modification of the first embodiment, and different from the first modification of the first embodiment in that an antenna-mounted IC chip 5B is used in place of the IC chip 5, and the first antenna portion 13 and the second antenna portion 15A are coupled electromagnetically with the mounted antenna.

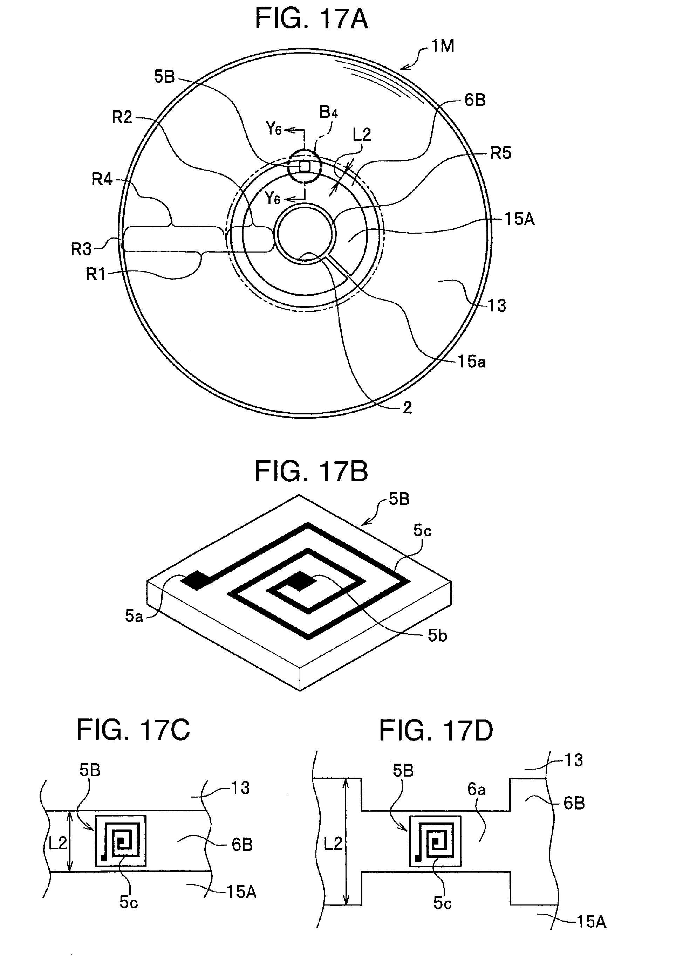

Fig. 17 is a diagram showing a general configuration of the CD making up the disk medium 1M according to this embodiment, in which Fig. 17A is a top plan view, Fig. 17B a perspective view showing the configuration of the antenna-mounted IC chip, and Figs. 17C, 17D enlarged views of the portion B₄ in Fig. 17A. Figs. 18A and 18B are enlarged views taken in line Y₆-Y₆ in Fig. 17A.

According to this embodiment, like in the first modification of the first embodiment, as shown in Fig. 17A, the annular slot 6B has the outer diameter of 30 mm and the width L2 of 3 mm, while the inner diameter of the second antenna portion 15A is 16 mm and the inner diameter of the central hole 2 is 15 mm.

The antenna-mounted IC chip 5B is mounted in the non-film area 16 not formed with the metal film 14 of the annular slot 6B in predetermined peripheral relative position with respect to the notch 15a (Fig. 18B). The IC chip 5B has the signal input/output electrodes 5a, 5b on one surface, or the upper surface thereof in Fig. 18B, and the signal input/output electrodes 5a, 5b are connected to each other spirally by the mounted antenna 5c of a metal conductor such as A1. The IC chip 5B, as shown in Fig. 18B, is surrounded, with a small gap of, say, not more than 1 mm, by the metal films 14 on the diametrically outside and inside of the annular slot 6B. The mounted antenna 5c thus is connected with the first antenna portion 13 and the second antenna portion 15A electromagnetically. In the case where the length of one side of the IC chip 5B is smaller than the width L2 of the annular slot 6B, as shown in Fig. 17D, a narrow portion 6a is formed in the annular slot 6B and the IC chip 5B is arranged therein.

The same component parts as those of the first modification of the first embodiment are designated by the same reference numerals, respectively, and not described again.

As shown in Fig. 18A, the IC chip 5B may be mounted on the annular slot 6B configured of the non-film portion 16 formed by masking, or as shown in Fig. 18B, a depression 17D may be formed in the particular part and the IC chip 5 may be mounted on the bottom surface of the depression 17D in such a manner that the protective layer 8 is flat.

As described above, by arranging the antenna-mounted IC chip 5B on the annular slot 6B, the area R1 formed with the metal film 14 can function as a slot antenna corresponding to the loop antenna.

According to the first to fourth embodiments and the modifications thereof (Figs. 1 to 8), the metal film 14 of the first antenna portion 13, the metal film 14 of the second antenna portion 15A, 15B, 15C and the A1 foil on both sides diametrically inside and outside of the annular slot 6A, 6B function as a slot antenna for the IC chip 5, 5A, 5B or the IC chip 5 mounted on the small inlet 11A, 11B and formed with the annular slot 6A, 6B.

Especially, the annular slot 6A, 6B is formed diametrically outside of the clamping area in the neighborhood of the boundary between the information non-recording area R2 and the information recording area R4, and therefore, communication can be established even during the reproducing or recording operation of the CD in the player or the recorder.

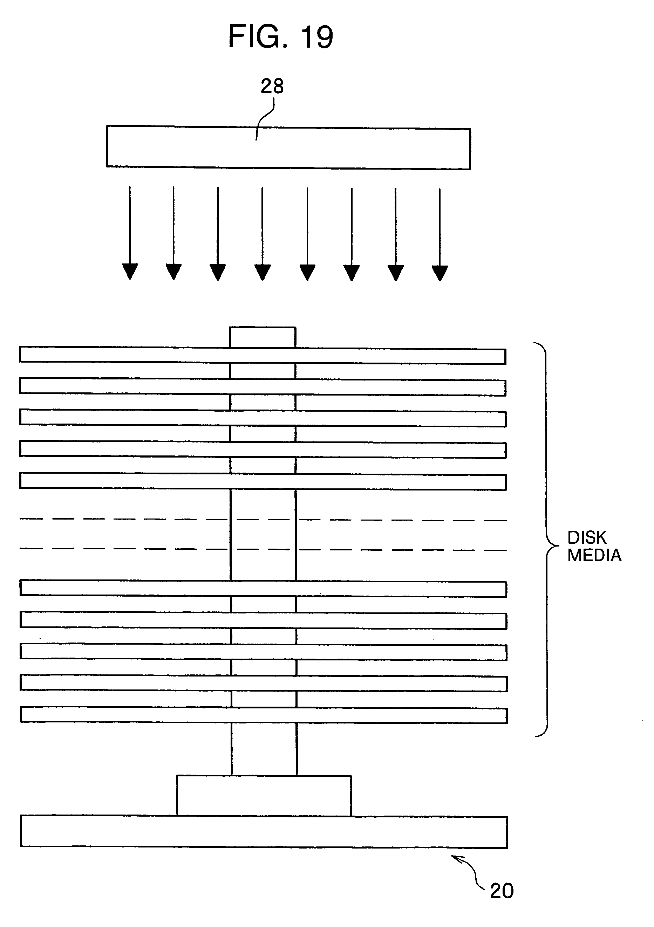

Also, since the annular slot 6A, 6B is connected in peripheral direction, as shown in Fig. 19, assuming that the R/W is brought near to the upper or lower side of the stocker 20 with a multiplicity of disk media stacked therein, the radio wave from the R/W antenna 28 is propagated through the annular slot 6A, 6B and communication can be established easily with any of the disk media in the stocker 20. According to JP-A-2006-92630 in which a slot having the length one half of the operating wavelength λ is formed in the peripheral direction as described, on the other hand, assume that a multiplicity of disk media are stored in stack. Unless the slots of the disk media are aligned in position peripherally, the radio wave would fail to reach the RFID tag of each disk medium through the slots. This would require a complicated job of aligning the disk media. In the embodiments and modifications described above, however, such a bothersome job is eliminated.

In the first to fourth embodiments and the modifications thereof described above, the slot 6A, 6B is assumed to be annular in shape. Nevertheless, the shape of the slot 6A, 6B is not limited to a ring but a rectangle or polygon having a peripheral length corresponding to the communication wavelength λ with equal effect.

### (Fifth embodiment)

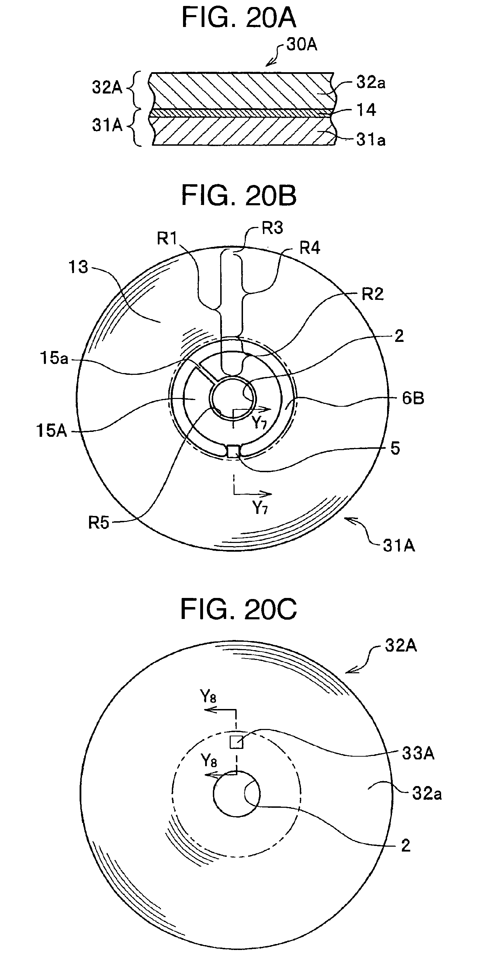

Next, a disk medium according to a fifth embodiment of the invention is explained with reference to Figs. 20 to 21.

The disk medium according to this embodiment is constituted of a one-side DVD 30A having an area having the metal film 14 formed only one side thereof, which metal film 14 is used as an antenna. The one-side DVD 30A is fabricated by attaching thin CDs to each other with the resin substrate sides thereof out and the metal films in side in opposed relation to each other. In this case, the metal film is formed on one of the CDs, while the other CD left only with the resin substrate. Thus, the configuration can be assumed to be similar to that explained with reference to the first to fourth embodiments and the modifications thereof.

Figs. 20A, 20B, 20C are diagrams for explaining the configuration in which the IC chip is mounted on the one-side DVD constituting a disk medium according to the fifth embodiment.

As shown in Fig. 20A, the one-side DVD 30A includes, attached to each other, a first disk 31A having a metal film 14 on a first resin substrate 31a and a second disk 32A having only a second resin substrate 32a without the metal film. The first disk 31A and the second disk 32A both have the thickness of about 0.6 mm, and the thickness of the one-side DVD 30A as a whole is about 1.2 mm and almost the same as that of CD. The difference from the CD or the like disk medium lies in that the CD or the like disk media 1A to 1L have the metal film 14 formed under the thin protective layer 8, whereas the one-side DVD 30A is formed with the metal film 14 substantially at the central portion along the thickness of the disk.

Also, in the case where two disks are attached to each other like the DVD, the ultraviolet-cured resin, for example, for the protective layer 9 formed on the metal film 14 of the CD is used as an adhesive and applied by spin coating or the like.

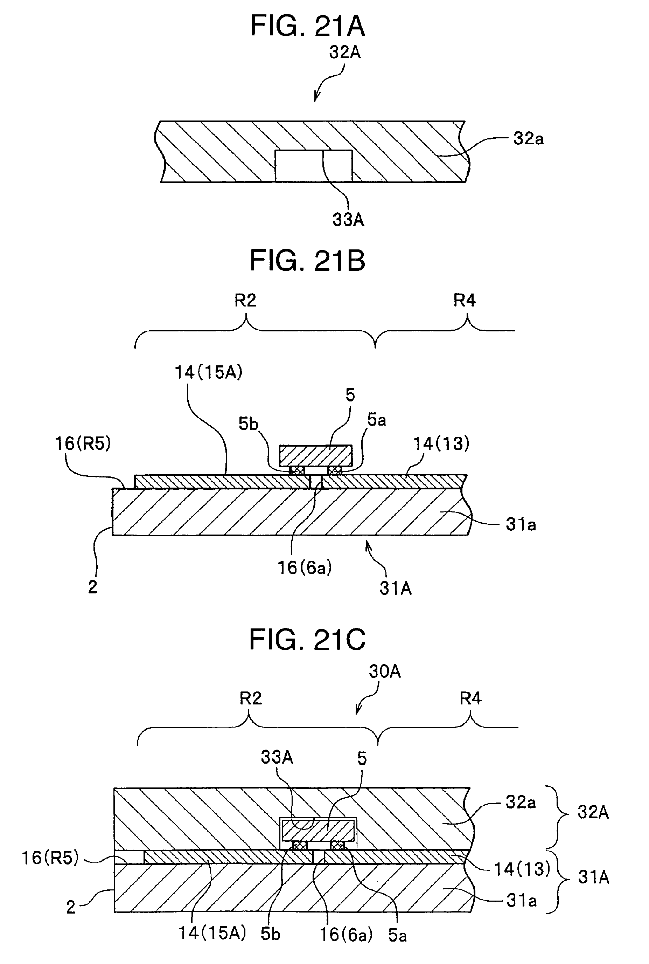

Fig. 20B is a top plan view of the first disk 31A before being attached to the second disk 32A in Fig. 20A, and Fig. 20C a bottom view of the second disk 32A before being attached to the first disk 31A in Fig. 20A. Fig. 21A is an enlarged sectional view of the second disk 32A taken in line Y₈-Y₈ in Fig. 20C, Fig. 21B an enlarged sectional view of the first disk 31A taken in line Y₇-Y₇ in Fig. 20B, and Fig. 21C a sectional view of the first disk 31A and the second disk 32A after being attached to each other.

In this one-side DVD 30A, as shown in Fig. 20B, an annular slot 6B is formed, like in the first modification of the second embodiment, on the surface of the metal film 14 of the first disk 31A, and as shown in Fig. 21B, the IC chip 5 is mounted in such a manner that the signal input/output electrodes 5a, 5b are connected to the metal film 14 over the narrow portion 6a of the annular slot 6B formed in the non-film portion 16 (Fig. 2B). On the second resin substrate 32a of the second disk 32A, on the other hand, a depression 33A sufficiently large to accommodate the IC chip 5 is formed, as shown in Figs. 20C, 21A, at a position corresponding to the IC chip 5 mounted on the metal film 14 of the first disk 31A. By attaching the first disk 31A and the second disk 32A configured this way to each other. Then, as shown in Fig. 21C, the one-side DVD 30A with the IC chip 5 mounted thereon is realized in which the metal film 14 of the first antenna portion 13 and the second antenna portion 15A functions as a slot antenna corresponding to the loop antenna.

As a result, as shown in Fig. 21C, the IC chip 5 is mounted at the central portion along the thickness of the one-side DVD 30A.

The same component parts as those of the first modification of the first embodiment are designated by the same reference numerals, respectively, and not described again.

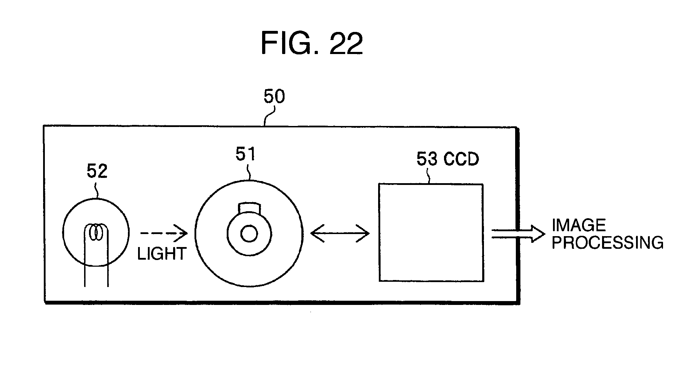

Fig. 22 is a schematic diagram showing a positioning unit for setting in position two disks making up the one-side DVD 30A including the first disk 31A and the second disk 32A to be attached to each other. The positioning unit 50 includes a rotary mechanism 51 for mounting thereon and rotating the first disk 31A and the second disk 32A horizontally, and a light source 52 and a CCD 53 having the imaging function arranged two each at upper and lower levels as compared with the rotary mechanism 51. The positioning unit 50 further includes an image processing unit, not shown, connected to the CCD 53 for detecting the position of the IC chip 5 mounted on the first disk 31A and the position of the depression 33A of the second disk 32A and a control unit, not shown, for setting the IC chip 5 of the first disk 31A and the depression 33A of the second disk 32A in relative positions in response to the detection signal from the image processing unit.

Although only one set of the rotary mechanism 51, the light source 52 and the CCD 53 is shown in Fig. 22, two sets of them for the first disk 31A and the second disk 32A are actually prepared.

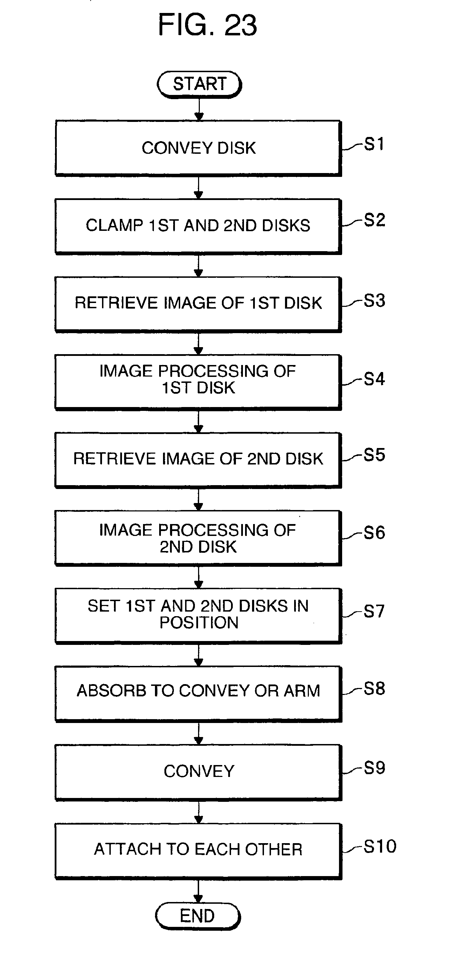

Fig. 23 is a flowchart showing the steps for attaching two disks including the first disk 31A and the second disk 32A to each other in the positioning unit. First, the first disk 31A and the second disk 32A are conveyed (step S1), and clamped on the rotary mechanism 51 (step S2). Light is radiated from the light source 52 and the transmitted image of the first disk 31A is retrieved by the CCD 53 (step S3), followed by the image processing to detect the position of the IC chip 5 (step S4). Next, the light is radiated from the light source 52 and the transmitted image of the second disk 32A is retrieved by the CCD 53 (step S5), followed by the image processing thereby to detect the position of the depression 33A (step S6). The second disk 32A is set in position with respect to the first disk 31A (step S7). Specifically, the first disk 31A and the second disk 32A are rotated relatively to each other so that the position of the IC chip 5 of the first disk 31A may coincide with the position of the depression 33A of the second disk 32A. The first disk 31A and the second disk 32A are adsorbed to the conveyor arm while the peripheral relative positions thereof are fixed (step S8), and after being conveyed to a predetermined position (step S9), the first disk 31A and the second disk 32A are attached to each other (step S10) thereby to complete the attaching process. As a result, the second disk 32A can be accurately set in position relative to the first disk 31A.

### (First modification of fifth embodiment)

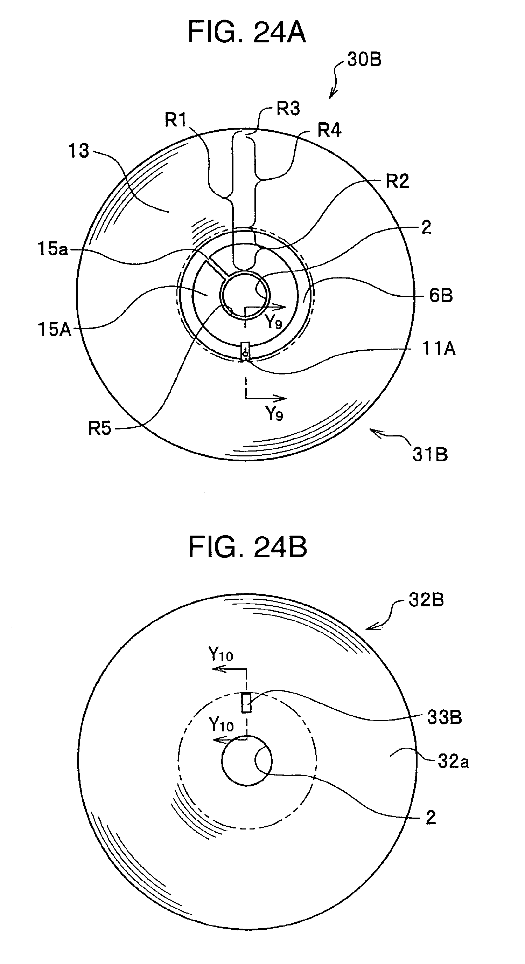

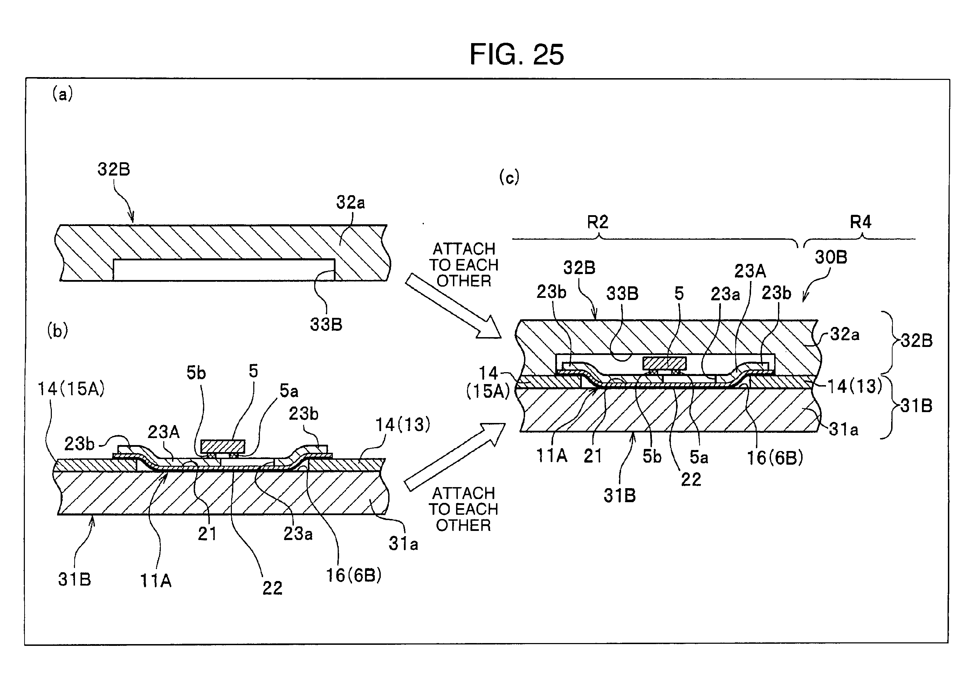

Next, a first modification of this embodiment is explained with reference to Figs. 24A, 24B and 25.

Fig. 24A is a top plan view of the first disk 31B before being attached to the second disk 32B. Fig. 24B is a bottom view of the second disk 32B before being attached to the first disk 31B. Fig. 25 is an enlarged sectional view taken in line Y₉-Y₉ in Figs. 24A, 24B, an enlarged view taken in line Y₁₀-Y₁₀ in Figs. 24A, 24B and a sectional view after attaching the first disk 31B and the second disk 32B to each other.

The one-side DVD 30B according to this modification is so configured that as shown in Figs. 24A, 24B, the surface of the metal film 14 of the first disk 31B is formed with an annular slot 6B configured of the non-film portion 16 within the area R1 having the metal film 14 as in the second embodiment.

In the direction along the length of the small inlet 11A as a diametrical direction, the ends 23b of the small antenna 23A are attached in superposition with the metal films 14 on both diametrically inside and outside of the annular slot 6B (Fig. 25). On the second resin substrate 32a of the second disk 32B, on the other hand, a depression 33B large enough to accommodate the small inlet 11A is formed, as shown in Fig. 14B, at a position corresponding to the small inlet 11A mounted on the first disk 31B. By attaching the first disk 31B and the second disk 32B having this configuration to each other, as shown in Fig. 25, the one-side DVD 30B with the small inlet 11A mounted thereon is realized in which the metal films 14 of the first antenna portion 13 and the second antenna portion 15A can function as a slot antenna corresponding to the loop antenna.

As a result, as shown in Fig. 25, the small inlet 11A is mounted at the central portion along the thickness of the one-side DVD 30B.

### (Second modification of fifth embodiment)

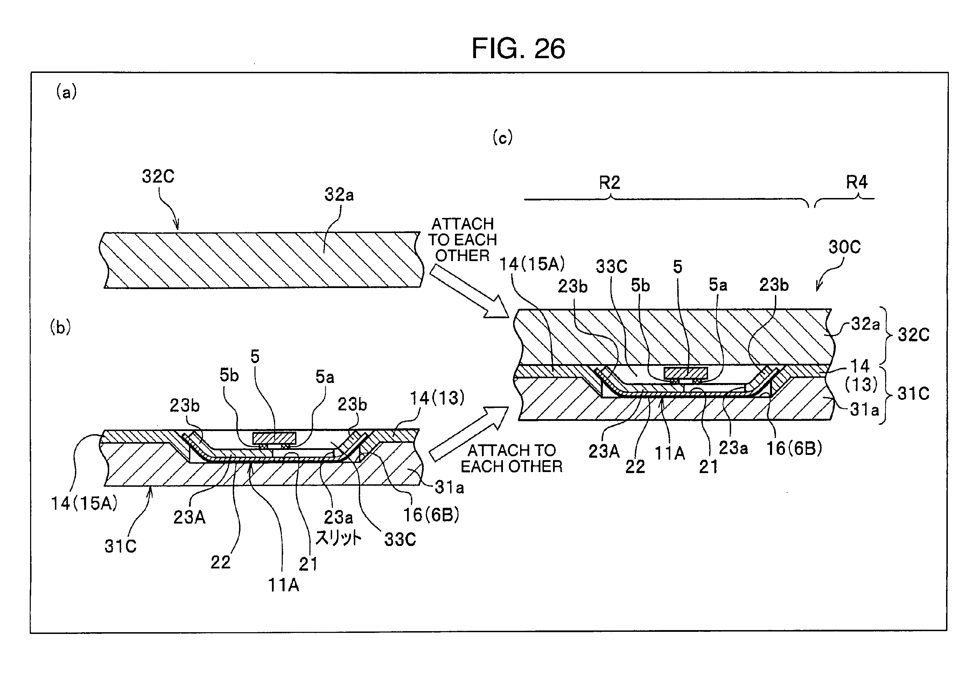

Also, as shown in Fig. 26, like in the modification of the second embodiment, the depression 33C for accommodating the small inlet 11A is formed on the first disk 31C, after which the metal film 14 is formed, and the small inlet 11A is attached to and accommodated in the depression 33C. In this case, the second disk 32C is not processed at all. By attaching the first disk 31C and the second disk 32C having this configuration to each other, as shown in Fig. 26, the one-side DVD 30C with the small inlet 11A mounted thereon is realized in which the metal films 14 of the first antenna portion 13 and the second antenna portion 15A function as a slot antenna corresponding to the loop antenna.

Although the modification of the fifth embodiment is configured with the small inlet 11A, the invention is not limited to this configuration. The small inlet 11B according to the second embodiment can be used also with the modification of this embodiment. Also, other flat small inlets such as a channel-shaped small inlet may be used.

In the first modification, the first and second disks of the one-side DVD 30B, 30C can be attached to each other using the positioning unit 50 like in the fifth embodiment.

### (Effects of fifth embodiment and modifications thereof)

According to the fifth embodiment and the modifications thereof, the metal film 14 extending over a wide range can be used as an antenna, and the IC chip 5 or the small inlet 11A as a RFID tag can form a highly sensitive antenna. As a result, a wide read/write area can be made available for the R/W.

According to this embodiment and the modifications thereof, every RFID tag is buried in the disk medium 30A, 30B, 30C, and therefore, a highly flat surface is achieved. Also, the IC chip 5 or the small inlet 11A making up the RFID tag is small in area, and therefore, the high strength of the disk is maintained.

Especially, the annular slot 6B is formed diametrically outside of the clamping area in the neighborhood of the boundary between the information non-recording area R2 and the information recording area R4, and therefore, communication is possible to establish also during the reproducing or recording operation of the one-side DVD in the player or recorder. Also, in a configuration with a multiplicity of one-side DVDs stacked in the stocker 20 as shown in Fig. 19, the communication with the RFID tag of the individual one-side DVD 30A, 30B, 30C can be easily established by holding the R/W over the upper or lower side of the stocker 20.

### (Sixth embodiment)

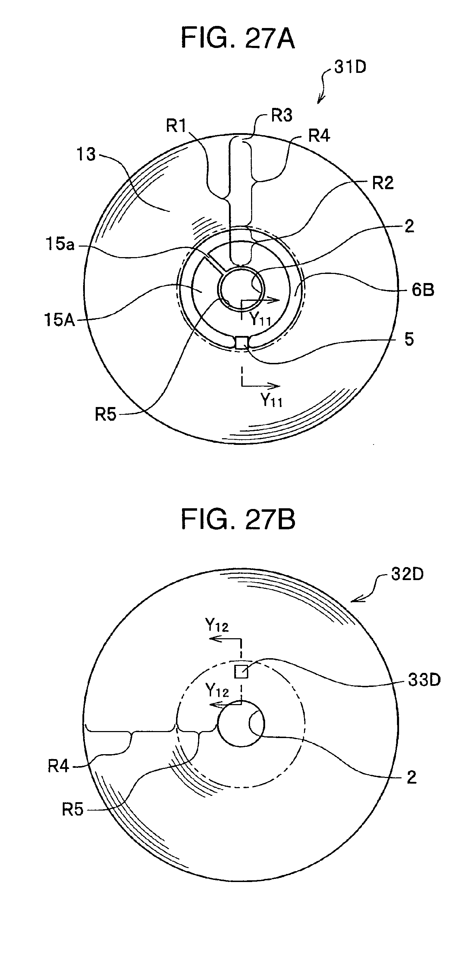

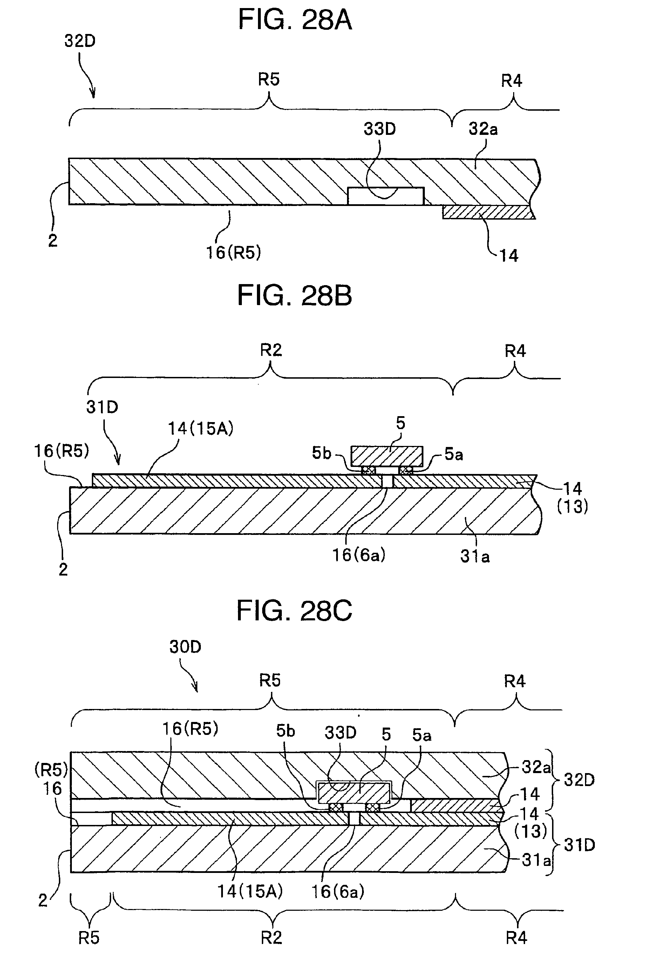

Next, the disk medium according to the sixth embodiment is explained with reference to Figs. 27A, 27B, 28A to 28C.

The disk medium according to this embodiment is the two-sided DVD 30D having the area R1 formed with the metal film 14 on both sides, in which the metal films 14 are used as an antenna. The two-sided DVD 30D is so configured that two thin CDs formed with a metal film 14 are attached to each other with the resin substrate sides out and the metal film 14 sides facing each other.

In the two-sided DVD, like the one-side DVD, the thickness of each disk is about 0.6 mm, and the total thickness about 1.2 mm and the same as that of CD.

Fig. 27A is a top plan view of the first disk 31D before being attached to the second disk 32D, and Fig. 27B a bottom view of the second disk 32D before being attached to the first disk 31D.

Fig. 28A is an enlarged sectional view taken in line Y₁₂-Y₁₂ in Fig. 27B, Fig. 28B an enlarged sectional view taken in line Y₁₁-Y₁₁ in Fig. 27A, and Fig. 28C a sectional view after the two disks are attached to each other.

Like in the first modification of the first embodiment, as shown in Figs. 27A, 28B, the annular slot 6B having no metal film 14 is formed in the neighborhood of the boundary between the information non-recording area R2 and the information recording area R4 of the first disk 31D, and the signal input/output electrodes 5a, 5b of the IC chip 5 are electrically connected to the metal film 14 over the annular slot 6B in diametrical direction.

As shown in Figs. 27B, 28A, on the other hand, the second disk 32D has, on the second resin substrate 32a, a depression 33D large enough to accommodate the IC chip 5 at a position corresponding to the IC chip 5 mounted on the metal film 14 of the first disk 31D, and the metal film 14 is formed on the surface of the second resin substrate 32a in such a manner that the diametrical area from the center of the central hole 2 to the inner diameter of the information recording area R4 constitutes a central non-film area R5 having the non-film portion 16. By attaching the first disk 31D and the second disk 32D having this configuration to each other, as shown in Fig. 28C, a two-sided DVD with the IC chip 5 mounted thereon is realized in which the metal film 14 of the first antenna portion 13 and the metal film 14 of the second antenna portion 15A on both sides diametrically inside and outside of the annular slot 6B can function as a slot antenna.

As an alternative, the information non-recording area R2 is formed, the annular slot 6B is formed in the neighborhood of the boundary between the information non-recording area R2 and the information recording area R4 and the IC chip 5 is mounted on the lower surface of the second disk 32D on the one hand, while the depression 33D and the central non-film area R5 are formed at corresponding positions on the first disk 31D on the other hand. Also in this case, a two-sided DVD with the IC chip 5 mounted thereon is realized in which the metal film 14 of the first antenna portion 13 and the metal film 14 of the second antenna portion 15A on both sides diametrically inside and outside of the annular slot 6B can function as a slot antenna.

### (Modifications of sixth embodiment)

A first modification of this embodiment is configured similarly to the first modification of the fifth embodiment by attaching the small inlet 11A on the surface of the metal film 4 in the information non-recording area R2 of the first disk 31D (or the second disk 32D).

In the case where the small inlet 11A is used, for example, the slit 23a of the small antenna 23A is located on the annular slot 6B and the ends 23b of the small antenna 23A are attached to the metal films 14, respectively, on both sides diametrically inside and outside of the annular slot 6B. The ends 23b of the small antenna 23A and the metal films 14 are connected to each other by capacitance coupling through the base film 21. Further, a depression sufficiently large to accommodate the small inlet 11A is formed at the corresponding position of the second disk 32D (or the first disk 31D). Then, the first disk 31D and the second disk 32D are attached to each other.

According to the sixth embodiment or the first modification thereof, in attaching the first disk 31D and the second disk 32D of the two-sided DVD 30D with the IC chip 5 or the small inlet 11A mounted thereon to each other, the position on a disk with the IC chip 5 or the small inlet 11A mounted thereof is required to be registered with the depression formed on the other disk corresponding to the IC chip 5 or the small inlet 11A, as the case may be. For this purpose, the position at which the IC chip 5 or the small inlet 11A is mounted on the first disk 31D and the shape and position of the depression 33D of the second disk 32D are read using the transmitted image, for example, by the positioning unit 50 explained in the 5th embodiment above. The first disk 31D and the second disk 32D, after being set in correct relative positions in this way, are attached to each other.

The sixth embodiment and the first modification thereof described above have such a configuration that the IC chip 5 or the small inlet 11A is attached on the metal film 14 of one of the two disks. As in the second modification of the fifth embodiment, however, one disk on which the depression 33C is formed on the resin substrate and the other disk on which the central non-film area R5 is formed may be attached to each other to form a two-sided DVD.

When attaching the first resin substrate and the second resin substrate of the DVD, the material of the protective layer 8 of the CD is used also as an adhesive, and therefore, and therefore, the problem of filling the adhesive in the central non-film area R5 in Fig. 28C is obviated.

### (Effects of sixth embodiment and modifications thereof)

According to the sixth embodiment and modifications thereof described above, the metal film 14 having a wide area can be used as an antenna, and a highly sensitive antenna can be formed by the IC chip 5 or the small inlet 11A as a RFID tag. As a result, a wide read/write area is made available for the R/W.

According to this embodiment and modifications thereof, every RFID tag is buried in the disk medium 30D, and therefore, a highly flat surface is formed. Also, the IC chip 5 or the small inlet 11A making up the RFID tag is os small in area that the disk has a high strength.

Especially, the annular slot 6B is arranged diametrically outside of the clamping area in the neighborhood of the boundary between the information non-recording area R2 and the information recording area R4, and therefore, the communication can be established even during the reproducing or recording operation of the two-sided DVD in the player or the recorder. Also, with a multiplicity of two-sided DVDs stacked in the stocker 20 as shown in Fig. 19, communication can be easily established with the RFID tag of each two-sided DVD by holding the R/W over the upper or lower side of the stocker 20.

The foregoing explanation is given about an example of the two-sided DVD 300 using the small inlet 11A, to which the invention is not limited. As an alternative, the small inlet 11B or the channel-shaped small inlet descried above is also applicable.

### (Other modifications of fifth and sixth embodiments)

The one-side DVD 30B, 30C and the two-sided DVD 30D are described above as a configuration in which the small inlet 11A is mounted at the central portion along the thickness. The invention is not limited to this configuration.

Alternatively, the metal films 14 can function as a slot antenna even in the case where the small inlet 11A, 11B is attached at a position corresponding to the annular slot 6B formed in the neighborhood of the boundary between the information non-recording area R2 and the information recording area R4 on the lower surface of the first disk or the upper surface of the second disk, i.e. the outer surface of a disk and the ends 23b of the small antenna 23A, 23B are connected by capacitance coupling to the metal films 14 on both sides diametrically inward or outward of the annular slot 6B. Also in this case, the slit 23a of the small antenna 23A, 23B corresponds to the position of the annular slot 6B, and the first disk or the second disk not formed with the annular slot 6B has an area diametrically inward of the information recording area R4 as a central non-film area R5 having no metal film 14.

By attaching the small inlet 11A, 11B on the outer surface of a disk in this way, the small inlet can be mounted inexpensively on the exiting DVD.

When attaching the small inlet on the outer surface of a disk, as in the third embodiment shown in (a) of Fig. 15, the annular slot antenna seal 12 having mounted thereon the small inlet 11A and the C-shaped second antenna portion 15C formed of an A1 foil may be attached to the original disk already completed, thereby making up a disk medium as shown in (b) of Fig. 15. In this case, both the first and second disks have the area diametrically inward of the information recording area R4 as the central non-film area R5.

### (Seventh embodiment)

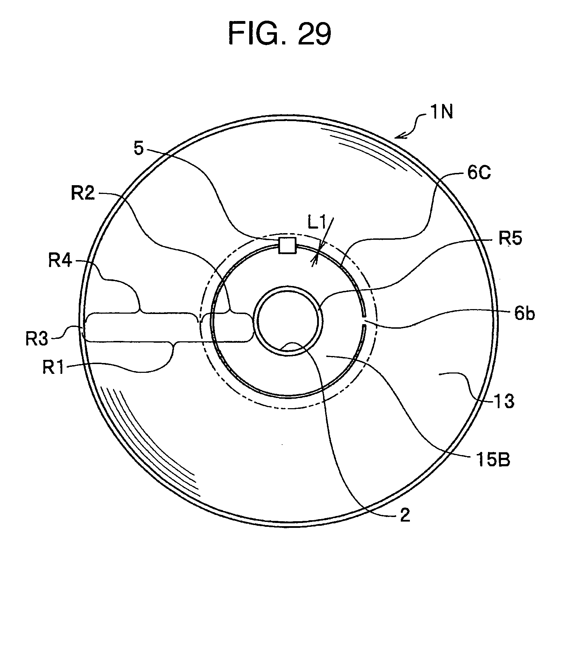

The disk medium according to a seventh embodiment of the invention is explained with reference to Fig. 29.

According to the first to sixth embodiments and the modifications thereof described above, the annular slot 6A, 6B is formed in the information non-recording area R2 in the neighborhood of the information recording area R4 in the area R1 formed with the metal film 14. With the disk medium 1N according to this embodiment, in contrast, a slot 6C not completely annular is used.

This embodiment is explained with the first embodiment as a basic example. Fig. 29 is a top plan view of the disk medium IN providing a CD. The same component parts as those of the first embodiment are designated by the same reference numerals, respectively, and not described again.

In the structure according to this embodiment, the slot 6C is not complete annular, but the first antenna portion 13 diametrically outside of the slot 6C and the annular second antenna portion 15B diametrically inside of the slot 6C are electrically connected to each other through a communicating portion 6b formed of the metal film 14. The IC chip 5 is is arranged at a predetermined peripheral position relative with the communicating portion 6b in such a manner that the signal input/output electrodes 5a, 5b, not shown, are electrically connected to the metal films 14 of the first and second antenna portions 13, 15B in the two diametrically inside and outside areas over the slot 6C. Also in this case, the first antenna portion 13 and the second antenna portion 15B can function as a slot antenna of the IC chip 5.

Incidentally, the peripheral length of the slot 6c is equal to the communication wavelength λ, and the predetermined peripheral relative position is so predetermined to secure impedance matching between the IC chip 5 and the antenna.

Although this embodiment is explained assuming that the slot 6C is single and not completely annular, the invention is not limited to this configuration and a plurality of incompletely annular slots 6C may be employed with equal effect.

In the foregoing description of this embodiment, the width L1 of the slot 6C is a value determined by the interval between the signal input/output electrodes 5a, 5b of the IC chip 5. This invention, however, is not limited to this configuration, and the width L1 may be larger while the narrow portion 6a is formed only in the portion for mounting the IC chip 5. Also, this embodiment, though explained above as an example applicable to the first embodiment, is applicable also to the method of mounting the IC chip or the small inlet in the second to fourth modifications of the first embodiment and the second to sixth embodiments and the modifications thereof.

Further, an application of the first to sixth embodiments or the modifications thereof makes it possible to form a light transmissible metal film as an intermediate layer and form an annular slot in this particular metal film in keeping with the disk media having a multilayer structure such as the next-generation DVD.

In the disk medium according to this invention, the metal film can be used as an antenna of the IC chip, and therefore, a wide read range can be secured. In an application involving great numbers of disk media in stack, therefore, the information of each disk medium can be efficiently managed. Thus, the management of the disk media including the prevention of duplication can be effectively carried out.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A disk medium (1A) having mounted thereon an IC chip (5) capable of receiving and delivering information from and to an external source without contact:
wherein the disk medium (1A) includes a metal film area (13, 15A) and a non-film area (6A) formed by being separated from the metal film area;
wherein the non-film area is a substantially annular slot arranged in the neighborhood substantially equidistant from a central hole (2); and
wherein the power supply terminals (5a, 5b) of the IC chip (5) are connected to the metal films of the metal film area over the non-film area.

2. The disk medium according to Claim 1,
wherein the peripheral length of the substantially annular slot (6A) is approximately λ, where λ is the electric wavelength taking the dielectric constant of a resin substrate (7) against the radio wave to be received or transmitted into consideration.

3. The disk medium according to Claim 1,
wherein the width of the substantially annular slot is larger than the distance between the power supply terminals except for the neighborhood of the power supply portion.

4. The disk medium according to Claim 1,
wherein one of the separated metal film areas constitutes an information recording area (R4) and the other metal film area (R2) not constituting the information recording area has a notch (15a) not formed with a metal film in such a shape as to diametrically connect the adjacent non-film area and the substantially annular slot to each other.

5. The disk medium according to Claim 4,
wherein the impedance matching is secured by the peripheral relative positions of the power supply terminals of the IC chip connected to the metal films of the separated metal film area one one hand and the notch on the other hand.

6. The disk medium according to Claim 1,
wherein the substantially annular slot is arranged diametrically outside of the clamping area arranged up to the distance of about 36 mm from the center to clamp the disk medium to the disk drive unit.

7. The disk medium according to Claim 1,
wherein the substantially annular slot is ring-shaped.

8. The disk medium according to Claim 1,
wherein at least one substantially annular slot is formed.

9. The disk medium according to Claim 1,
wherein the substantially annular slot is polygonal.

10. The disk medium according to Claim 1,
wherein the substantially annular slot has the width of 4 mm.

11. The disk medium according to Claim 4,
wherein the width of the notch is 3 mm.

12. The disk medium according to Claim 1,
wherein the IC chip is mounted on the surface of the metal film.

13. The disk medium according to Claim 1,
wherein a depression is formed on the resin substrate constituting a base substrate of the metal film, and the IC chip is mounted on the surface of the metal film formed on the bottom surface of the depression.

14. The disk medium according to Claim 1,
wherein the metal film is formed by anisotropic deposition from above the resin substrate.

15. The disk medium according to Claim 1,
wherein the power supply terminals of the IC chip for the antenna are connected to the metal film through an anisotropic conductive film.

16. A disk medium having mounted thereon an IC chip capable of receiving and delivering information from and to an external source without contact:
wherein the disk medium includes a metal film area and a non-film area formed by separating the metal film area;
wherein the non-film area is a substantially annular slot arranged in the neighborhood substantially equidistant from the central hole; and
wherein predetermined points of the small inlet including the IC chip are connected electrically or by capacitance coupling to the metal films of the metal film area over the non-film area.

17. The disk medium according to Claim 16,
wherein the substantially annular slot is ring-shaped.

18. The disk medium according to Claim 16,
wherein the substantially annular slot is at least one in number.

19. The disk medium according to Claim 16,
wherein the substantially annular slot is polygonal.

20. The disk medium according to Claim 16,
wherein the width of the substantially annular slot is 4 mm.

21. The disk medium according to Claim 16,
wherein the length of the small antenna of the small inlet is shorter than λ/2 and the peripheral length of the substantially annular slot is approximately λ, where λ is the electric wavelength taking the dielectric constant of the resin substrate against the radio wave to be received or transmitted into consideration.

22. The disk medium according to Claim 16, further comprising a notch having no metal film and formed in such a shape as to diametrically connect the non-film area diametrically inward of the metal film area separated and the substantially annular slot to each other.

23. The disk medium according to Claim 22,
wherein the width of the notch is 3 mm.

24. The disk medium according to Claim 22,
wherein the impedance matching is secured by the peripheral relative positions of the predetermined points of the small antenna of the small inlet connected to the metal film of the metal film area separated on the one hand and the notch on the other hand.

25. The disk medium according to Claim 16,
wherein the substantially annular slot is formed diametrically outward of the clamping area for clamping the disk medium to the disk drive unit, and the small inlet is mounted on the surface of the non-film area or buried in the depression of the resin substrate constituting the base substrate of the non-film area.

26. The disk medium according to Claim 16,
wherein the ends of the small inlet are electrically connected to the metal film of the separated metal film area through an anisotropic conductive film interposed between the ends of the small inlet and the metal film.

27. The disk medium according to Claim 1, which is selected one of CD and DVD.

28. A disk medium having mounted thereon an IC chip capable of receiving and delivering information from and to an external source without contact, comprising a metal film area and a non-film area formed by separating the metal film area,
wherein the non-film area is a substantially annular slot arranged in the neighborhood substantially equidistant from the central hole; and
wherein the IC chip has a mounted antenna on one surface thereof and is mounted in the substantially annular slot.

29. A seal comprising an inlet including an IC chip and a small antenna and an antenna,
wherein the inlet and the antenna are fixed on the seal;
wherein a substantially annular slot making up a non-film area is formed between the antenna and the metal film area of the disk medium; and
wherein the inlet connects the antenna and the metal film of the metal film area of the disk medium by capacitance coupling to each other.

30. A method of manufacturing a disk medium having an IC chip mounted thereon, comprising the steps of:
forming a substantially annular slot constituting an annular non-film area not formed with a metal film from the metal film formed in the disk medium; and
connecting the surface of the metal films corresponding to the positions at which the IC chip is mounted over the substantially annular slot on the one hand and the terminals for supplying power to the antenna of the IC chip on the other hand.

31. A method of manufacturing a disk medium having mounted thereon a small inlet including a small antenna having a slit for impedance matching between an IC chip and an antenna, comprising the steps of:
forming a substantially annular slot constituting a non-film area not formed with a metal film from the metal film area formed in the disk medium;
coating an anisotropic conductive film at the portions of the metal film formed in the disk medium and corresponding to the positions at which predetermined points of the small antenna are electrically connected over the substantially annular slot; and
arranging the body of the small inlet in the substantially annular slot and connecting the predetermined points to the portions coated with the anisotropic conductive film.

32. A method of manufacturing a disk medium having mounted thereon a small inlet using a IC chip,
wherein a seal, which includes an annular metal film having a radius smaller by a predetermined amount than the radius of the inner periphery of the information recording area of the disk medium formed with the metal film and the small inlet with one end thereof laid over the outer peripheral edge of the metal film, is attached on the disk formed with the information recording area by holding the interval of the predetermined amount between the inner peripheral edge of the information recording area and the outer peripheral edge of the metal film.
